# EUROPÄISCHE PATENTSCHRIFT

(11) **EP 3 382 212 B1**
(45) Veröffentlichungstag und Bekanntmachung des Hinweises auf die Patenterteilung: **08.07.2026**
(21) Anmeldenummer: 18164753.8
(22) Anmeldetag: 28.03.2018
(51) Int. Cl.: F16B 12/12, F16B 12/24, F16B 11/00, F16B 5/06, F16B 5/01

(54) **VERLEIMKÖRPER ZUM VERLEIMEN EINER LEICHTBAUPLATTE**
GLUING BODY FOR GLUEING A LIGHTWEIGHT BOARD
CORPS D'ENCOLLAGE DESTINÉ À ENCOLLAGE D'UNE PLAQUE LÉGÈRE

(30) Priorität: 29.03.2017 DE 102017106800; 30.03.2017 DE 102017106922
(43) Veröffentlichungstag der Anmeldung: 03.10.2018
(73) Patentinhaber: Technische Hochschule Ostwestfalen-Lippe, 32657 Lemgo (DE)
(72) Erfinder: Stosch, Martin, 50679 Köln (DE)
(74) Vertreter: Michalski Hüttermann & Partner mbB

(56) Entgegenhaltungen:
- EP-A1- 1 630 427
- EP-A1- 2 335 525
- DE-A1- 102009 048 420
- DE-A1- 4 320 164
- DE-U1- 29 503 533

## Beschreibung

Die Erfindung betrifft einen Verleimkörper zum Verleimen einer Leichtbauplatte mit einem Werkstoffkörper, ein Verfahren zum Verleimen von mindestens einer Leichtbauplatte mit einem Werkstoffkörper und eine Werkstoffkörperverbindung zum Verbinden einer Leichtbauplatte mit einem Werkstoffkörper.

Bei Leichtbauplatten mit Deckschichten und einer Mittellage, insbesondere bei Leichtbauplatten, bei denen zumindest die Deckschichten Holzwerkstoffe sind, bestehen große Probleme die Leichtbauplatten untereinander oder mit anderen Werkstoffen, insbesondere Plattenwerkstoffen, wirtschaftlich zu verbinden. Ursächlich hierfür ist die Mittellage, die zumeist keine ausreichende Festigkeit aufweist. Zwar bilden die Deckschichten ebene Flächen aus, jedoch weisen diese ebenfalls zu geringe Festigkeiten auf, um übliche Verbindungsmittel und Beschläge an ihnen zu befestigen. So könne bspw. üblich Runddübel oder Flachdübel zum Verbinden von zwei Platten nicht genutzt werden, da diese keinen ausreichenden Halt in der Leichtbauplatte finden.

Im großindustriellen Bereich, d.h., in der Massenproduktion von Möbeln werden diese Probleme durch massive Einleger behoben, die bei der Produktion der Leichtbauplatte genau in den Bereichen platziert werden, in die später Beschläge oder Verbindungsmittel eingearbeitet werden sollen. Dies ist jedoch nur möglich, wenn bereits bei der Herstellung der Platten deren spätere Verwendung bekannt ist. Bei der handwerklichen Herstellung von Möbeln, bei der Standardplatten auf die jeweilig benötigte Bauteilgröße individuell zugeschnitten werden, ist eine produktionsseitige Verstärkung der Platten dementsprechend nicht möglich. Hier müssten nachträglich Ausnehmungen für Einleger erzeugt und die Einleger eingeklebt werden.

Das industrielle Einbringen von Einlegern erfolgt zudem hauptsächlich bei Leichtbauplatten mit Stärken von mehr als 20 mm, da aufgrund der Einleger das Gewicht der Leichtbauplatten ansteigt und bei dünneren Platten der Gewichtvorteil zu gering ist. So werden gerade Platten im Stärkebereich zwischen 10 mm bis 20 mm selten als Leichtbauplatten ausgebildet. Gerade Platten dieser Stärken werden jedoch bspw. im Möbelbau für Schränke, deren Korpusteile, Einlegeböden, Türen usw. sowohl im Handwerk als auch in der Industrie vorrangig genutzt.

Alternativ gibt es spezielle Leichtbauplattenverbinder und Leichtbauplattenbeschläge, deren Einsatzmöglichkeiten jedoch jeweils sehr beschränkt sind, die einen hohen Montageaufwand mit sich bringen, teuer sind und für deren Einbau meistens spezielle Werkzeuge notwendig sind. DE 10 2009 048420 A1 offenbart einen Fügeverbund, umfassend a) eine Leichtbau-Sandwichstruktur mit einer ersten Folie, einer weiteren Folie und einem zwischen den Folien befindlichen, die Folien auf Abstand haltenden Kernwerkstoff, b) eine weitere Struktur mit einer Fügefläche, die mit einer Stirnseite der Leichtbau-Sandwichstruktur einen Winkelstoß bildet, im Winkelstoß zwischen den Folien eine Ausnehmung aufweist und mit der Leichtbau-Sandwichstruktur längs des Winkelstoßes stoffschlüssig, vorzugsweise durch Klebung, gefügt ist, c) und einen den Winkelstoß überbrückenden Fixierpin, der zwischen die Folien ragt und die Leichtbau-Sandwichstruktur durch Formschluss tangential zur Fügefläche in wenigstens eine Richtung relativ zu der weiteren Struktur fixiert. EP 2 335 525 A1 betrifft ein Möbel mit einer sich in einer Längsrichtung (X) erstreckenden Leichtbauplatte, die eine obere Deckplatte und eine untere Deckplatte aus einem Lignozellulose enthaltenden Material sowie eine dazwischen angeordnete leichte Mittellage aufweist, mit mindestens einem sich senkrecht zur Längsrichtung (X) erstreckenden Möbelfuß, wobei der mindestens eine Möbelfuß mit einer seiner Stirnseiten der Außenseite der unteren Deckplatte zugewandt ist, mit einer Verbindungsanordnung, die die Leichtbauplatte mit dem mindestens einen Möbelfuß verbindet, wobei die Verbindungsanordnung je Möbelfuß mindestens eine erste Ausnehmung, die in der der Außenseite der unteren Deckplatte zugewandten Stirnseite des mindestens einen Möbelfußes vorgesehen ist, mindestens eine zu der ersten Ausnehmung koaxiale zweite Ausnehmung, die in der Leichtbauplatte vorgesehen ist und durch die untere Deckplatte und die Mittellage hindurch bis mindestens an die obere Deckplatte reicht, und mindestens einen Verbindungsstift aufweist, der in der mindestens einen ersten Ausnehmung und in der mindestens einen zweiten Ausnehmung angeordnet ist. Damit wird ein Möbel geschaffen, welches auch bei Verwendung einer Leichtbauplatte eine stabile Verbindung zwischen Leichtbauplatte und Möbelfuß gewährleistet. DE 43 20 164 A1 offenbart eine Verbindungsvorrichtung umfassend aus dem Paneelkörper herausgeformte Befestigungselemente in Form von nockenartigen Vorsprüngen und scheibenartigen Mitteln, die in entsprechende Aussparungen des zu verbindenden Paneels eingreifen. Ziel ist es, eine verdeckte Befestigungsmöglichkeit für zwei Paneele, insbesondere Sandwichpaneele und Bauteile, bereitzustellen.

Der Erfindung liegt die Aufgabe zugrunde eine Vorrichtung, ein Verfahren und eine entsprechende Werkstoffverbindung bereitzustellen, mit der Leichtbauplatten besonders einfach miteinander verleimt werden können.

Die Erfindung löst die Aufgabe durch eine Werkstoffkörperverbindung mit den Merkmalen des Anspruchs 1, sowie ein Verfahren zu Herstellung einer Werkstoffkörperverbindung mit den Merkmalen des Anspruchs 13.

Der erfindungsgemäß in einer Werkstoffkörperverbindung einzusetzende Verleimkörper zum Verleimen einer Leichtbauplatte mit einem Werkstoffkörper, wobei die Leichtbauplatte mindestens eine zwischen zwei Deckschichten (im Weiteren auch Decklagen genannt) angeordnete Mittelschicht (im Weiteren auch Mittellage genannt) aufweist, wobei der Verleimkörper ist einstückig ausgebildet und umfasst mindestens zwei Verleimabschnitte, wobei ein erster Verleimabschnitt zum Verleimen mit beiden Deckschichten der Leichtbauplatte und ein zweiter Verleimabschnitt zum Verleimen mit dem Werkstoffkörper ausgebildet sind.

Über die beiden Verleimabschnitte und die einstückige Ausbildung des Verleimkörpers ist es auf besonders einfache Weise möglich, eine Leichtbauplatte mit einem anderen Werkstoffkörper zu verleimen. Dabei ermöglicht der Verleimkörper eine ausschließliche Klebemittelverbindung zwischen der Leichtbauplatte und dem Werkstoffkörper herzustellen, ohne weitere separate Verbindungsmittel, wie Schrauben, Beschläge oder Ähnliches. Zudem ermöglicht es der Verleimkörper individuell zugeschnittene Leichtbauplatten über eine Klebeverbindung mit anderen Werkstoffkörpern zu verkleben, ohne das aufwendig Einsätze, Spezialbeschläge oder Ähnliches in die Leichtbauplatte eingearbeitet werden müssen. Letztlich ermöglicht der Verleimkörper zudem auch dünne Leichtbauplatten, d.h. insbesondere Leichtbauplatten mit einer Stärke zwischen 20 mm und 10 mm auf einfache Art und Weise mit anderen Werkstoffkörpern zu verkleben.

Die Einstückigkeit des Verleimkörpers vereinfacht die Montage und gewährleistet eine sichere Verbindung zwischen der Leichtbauplatte und dem Werkstoffkörper. Unter einstückig wird verstanden, dass der Verleimkörper ein Bauteil ist, das nicht zerstörungsfrei zerlegt werden kann.

Vorteilhaft besteht der Verleimkörper aus Massivholz, einem Faserwerkstoff, insbesondere einem HDF oder MDF, einem Spanwerkstoff, einem Kunststoff oder einem Wood-Plastic-Composite (WPC). So kann er bspw. entsprechend den bekannten Lamello Flachdübeln aus gepresstem und geprägtem Buchenholz bestehen. Alternativ kann der Verleimkörper bspw. auch aus einem Metall oder einer Kombination aus zwei oder mehreren der vorgenannten Werkstoffe bestehen. Der Verleimkörper ist insbesondere als gegenüber der Deckschicht und der Mittelschicht separates Bauteil ausgebildet.

Die Leichtbauplatte weist zwei Deckschichten auf, die mit der Mittellage fest und nicht zerstörungsfrei trennhar verbunden sind. Die Deckschichten sind vorteilhafterweise aus einem Holzwerkstoff. So können die Deckschichten bspw. aus Spanplatte, Faserplatte, insbesondere MDF oder HDF, Furnierholzplatte, Furnier, Sperrholzplatte, Tischlerplatte oder einer Wood-Plastic-Composite-Platte ausgebildet sein.

Die Mittellage weist vorteilhafterweise gegenüber den Decklagen ein geringeres spezifisches Gewicht auf. Die Mittellage kann bspw. ein Schaumkern, eine Wabenplatte aus Papier / Pappe / Kunststoff / Holzwerkstoff, eine Holzwerkstoffplatte mit geringem spezifischen Gewicht o. ä. sein. Auch kann die Mittellage mehrschichtig ausgebildet sein. So kann die Mittellage bspw. aus einer Kombination der vorgenannten Werkstoffe bestehen.

Grundsätzlich ist der Verleimkörper zum Verleimen (Verkleben) mit sämtlichen im Bereich der Holzwerkstoffverarbeitung üblichen Klebemitteln geeignet. So kann der Verleimkörper bspw. mittels Weißleim oder anderen ein- oder mehrkomponentigen Dispersions- oder Lösemittelklebstoffen, ein-, zwei- oder mehrkomponentigen Reaktionsklebstoffen, Schmelzklebstoffen, auch reaktiven Schmelzklebstoffen und sonstigen Klebstoffen mit der Leichtbauplatte verleimt werden. Der Verleimkörper kann auch derartig mit Klebstoffen vorbeschichtet sein, dass die Klebkraft durch Zugabe von Wasser oder Lösemittel oder einer Härterkomponente oder durch Einwirken von Energie wie bspw. Lichtwellen oder Ultraschall u. dgl. vor oder während des Fügeprozesses aktiviert wird.

Unter einem Werkstoffkörper können Bauteile unterschiedlicher Art verstanden werden. So können dies bspw. Möbelelemente, wie Stollen, Beine, Arme oder Ähnliches sein. Vorteilhafterweise sind die Werkstoffkörper ebenfalls Platten, insbesondere Holzwerkstoffplatten, wie bspw. Faserplatten (MDF, HDF, usw.), Spanplatten, OSB-Platten, Tischlerplatten, Furnierholzplatten. Dies können Vollmaterialwerkstoffe sein. Auch können die Werkstoffköper ebenfalls Leichtbauwerkstoffe, bspw. Leichtbauplatten sein. Als Werkstoffkörper ausgebildete Leichtbauplatten weisen vorteilhafterweise ebenfalls eine zwischen zwei Deckschichten angeordnete Mittelage auf.

Die Form der Verleimkörper kann im Rahmen der Definition wie in den Ansprüchen unterschiedlich ausgebildet sein. Vorzugsweise weist sie im horizontalen Querschnitt (bspw. durch die beiden Verleimabschnitte) eine an die bekannte Lamellodübelform angepasste mandelförmige Form auf. Unter mandelförmig wird eine ovale Form aus zwei identischen sich schneidenden Kreisbögen verstanden, wobei die Schnittpunkte abgerundet sind. Die Größe (Außenmaße) des Verleimkörpers, insbesondere die Länge, Breite und ggf. die Stärke der Verleimabschnitte kann an die bekannten Maße der Lamellodübel angepasst sein. Besonders vorteilhaft ist die Anpassung der Kreisbögen an einen Radius von 100 mm, welcher dem üblichen Fräsradius von Lamellodübeln entspricht.

Sofern eine vollständige Mandelform nicht vorliegt, ist vorteilhafterweise mindestens der erste oder zweite Verleimabschnitt an die bekannte Lamellodübelform angepasst und weist einen halbmandelförmigen Querschnitt (Horizontalschnitt) auf. Unter halbmandelförmig wird eine an der Längsachse geteilte Mandelform verstanden. Hierdurch ist gewährleistet, dass vorhandene, für Lamellodübel ausgelegte Fräswerkzeuge auch bei dem Einsatz des Verleimkörpers besonders einfach eingesetzt werden können.

Gerade die Verleimabschnitte können in ihrer Form jedoch auch angepasst sein. So können der Verleimkörper und/oder die Verleimabschnitte im horizontalen Querschnitt auch bspw. eine weitestgehend eckige, bspw. eine rechtwinkelige Form, aufweisen.

Mittels des Verleimkörpers sind zum einen Stoßkantenverbindungen zwischen einer Leichtbauplatte und einem Werkstoffkörper herstellbar. Bei gleicher Materialstärke können diese bspw. oberflächenbündig hergestellt werden. Zudem können auch Eckverbindungen bzw. T-Verbindungen zwischen der Leichtbauplatte und dem Werkstoffkörper hergestellt werden. Zu beachten ist, dass der Verleimkörper mit seinem ersten Verleimabschnitt immer mit beiden Deckschichten der Leichtbauplatte und mit seinem zweiten Verleimabschnitt mit dem Werkstoffkörper verklebt ist.

Sofern der Werkstoffkörper ebenfalls eine Leichtbauplatte ist, ist der zweite Verleimabschnitt sowohl bei einer Stoßkantenverbindung als auch bei einer Eck- oder T-Verbindung vorzugsweise ebenfalls mit beiden Deckschichten des Werkstoffkörpers verklebt.

Nach einer Weiterbildung der Erfindung weist der Verleimkörper im vertikalen Querschnitt (entlang der Breite des Verleimkörpers) einen gestuften Querschnitt auf. D.h., im vertikalen Querschnitt durch die beiden Verleimabschnitte sind über die ganze Breite des Verleimkörpers betrachtet Stufen/Absätze vorhanden. Unter gestuften Querschnitten sind zudem im vertikalen Querschnitt sich darstellende Ausnehmungen oder Nuten mit Absätzen / Ecken zu verstehen. Dabei ist anzumerken, dass bei den Stufen / Absätzen auch die jeweiligen mittleren Ebenen der einzelnen Abschnitte Stufe/Absätze aufweisen. So werden bspw. Oberflächenprägungen nicht als Stufen/Absätze angesehen.

Besonders bevorzugt weisen die Verleimabschnitte eine unterschiedliche Stärke auf, wobei zwischen den Verleimabschnitten eine Stufe angeordnet ist. Dabei ist der erste Verleimabschnitt auf die Stärke der Mittellage der Leichtbauplatte ggf. ergänzt um die Höhe von an den Innenseiten erzeugten Ausnehmungen angepasst.

Der erste Verleimabschnitt weist zwei Verleimoberflächen auf, die parallel zueinander angeordnet sind, und zum Verleimen mit jeweils einer der Deckschichten ausgebildet sind. Dementsprechend ist der Abstand der mit den Deckschichten zu verleimenden Verleimoberflächen bspw. gleich der Stärke der Mittellage.

Zur besonders guten Verleimung des Verleimkörpers mit der Leichtbauplatte werden jedoch im Bereich der Innenseiten der Deckschichten, bspw. mit einem Fräswerkzeug, Ausnehmungen erzeugt, so dass der Abstand der Verleimoherflächen an dem ersten Verleimabschnitt dem Abstand der Oberflächen der Ausnehmungen an den beiden Deckschichten entspricht.

Die Stärke des ersten Verleimabschnittes ist abhängig von der Stärke der jeweiligen Leichtbauplatte, der Stärke der Deckschichten und davon, ob die Ausnehmung flächenbündig mit der Innenoberfläche der Deckschichten erzeugt wird oder ob die Ausnehmungen in die Deckschichten und ggf. mit welcher Tiefe (Stärke: Y-Richtung) eingreifen. Dabei beträgt die Eingriffstiefe (bzw. die verbleibende Überdeckung) vorzugsweise ca. ½ der Deckschichtstärke. Für Leichtbauplatten mit Deckschichtstärken zwischen 3 mm und 4 mm kann die Eingriffstiefe bspw. 1 mm, 1,5 mm oder 2 mm, d.h. vorzugsweise zwischen 1 mm bis 2 mm betragen.

Für Leichtbauplatten mit einer Stärke zwischen 10 mm und 20 mm beträgt die Stärke des ersten Verleimabschnitts des Verleimkörpers vorteilhafterweise zwischen 4 mm bis 18 mm, bevorzugt zwischen 4,5 mm bis 18 mm, besonders bevorzugt zwischen 5 mm bis 18 mm, vorzugsweise zwischen 11 mm bis 17 und vorteilhaft zwischen 15 mm bis 16 mm jeweils mit einer Toleranz von ca. +0,2/-0,2 mm. So sind bspw. bei einer 19 mm starken Leichtbauplatte erste Verleimabschnitte des Verleimkörpers zwischen 11 mm bis 16 mm und bevorzugt zwischen 13 mm und 15 mm beispielsweise auch 14 mm besonders geeignet.

Die Stärke des zweiten Verleimabschnittes kann dementsprechend ausgebildet sein, beträgt jedoch vorzugsweise 4 mm +/- maximal 0,3 mm bzw. 8 mm +/- maximal 0,3 mm, also die übliche Stärke von flachen mandelförmigen Lamellodübeln. Hierdurch können die bekannten Geräte zum Einfräsen der Ausnehmungen für die flachen Lamellodübel auch bei den erfindungsgemäßen Verleimkörpern genutzt werden.

Unter einer Stufe wird dabei ein Absatz verstanden, an dem eine Kante ausgebildet ist. Die Stufe weist eine Stufenfläche auf. Besonders bevorzugt ist die Stufenfläche in einem Winkel von 90° +/-1 bis 2° oder 45° +/- 1° bis 2° zu der Verleimoberfläche des ersten Verleimabschnitts angeordnet.

Nach einer Weiterbildung der Erfindung ist der zweite Verleimabschnitt in Vertikalrichtung zwischen den Verleimoberflächen des ersten Verleimabschnitts, vorzugsweise mittig, besonders bevorzugt im Abstandverhältnis ¼ zu ¾ oder in einer Flucht mit einer der Verleimoberflächen des ersten Verleimahschnitts angeordnet. Der zweite Verleimabschnitt ragt dabei beispielsweise aus einer Stufenfläche heraus, d.h. erstreckt sich in Parallelrichtung der Verleimoberflächen des ersten Verleimabschnitts.

Die Stärke des ersten Verleimabschnitts ist an die Stärke der Leichtbauplatte angepasst. So kann der erste Verleimabschnitt bspw. aus einem massiven Bauteilabschnitt bestehen, der sich über die jeweilige Stärke des Verleimkörpers erstreckt. Nach einer Weiterbildung der Erfindung weist der erste Verleimabschnitt zwei Lamellen auf, die entsprechend beabstandet angeordnet sind und die jeweils eine Verleimoberfläche zum Verleimen mit jeweils einer der Deckschichten der Leichtbauplatte aufweisen.

Die Lamellen des ersten Verleimabschnitts können eine auf die bekannten Lamellodübel angepasste Stärke von ca. 4 mm +/- maximal 0,3 mm aufweisen, wodurch wiederum die bekannten Fräswerkzeuge bei der Montage eingesetzt werden können.

Der zweite Verleimabschnitt kann insbesondere bei der Ausbildung des Werkstoffkörpers als Leichtbauplatte entsprechend dem ersten Verleimabschnitt ausgebildet werden. Besonders bevorzugt ist der zweite Verleimabschnitt plattenförmig (bspw. als plattenförmige Lamelle) ausgebildet und weist eine Stärke von 4 mm +/- maximal 0,3 mm oder eine Stärke von 8mm +/- max-0,3mm auf.

Besonders bevorzugt kann der zweite Verleimabschnitt auch zwei, bspw. parallel angeordnete Lamellen umfassen, wobei insbesondere jede Lamelle jeweils eine Verleimoberfläche zum Verleimen mit jeweils einer Deckschicht des Werkstoffkörpers aufweist.

Nach einer Weiterbildung der Erfindung weist der Verleimkörper einen dritten und/ oder vierten Verleimabschnitt auf, wobei der dritte und/oder vierte Verleimabschnitt zum Verleimen mit beiden Deckschichten einer Leichtbauplatte oder zum Verleimen mit einem Werkstoffkörper ausgebildet ist. Insbesondere ist der dritte Verleimabschnitt zum Verleimen mit beiden Deckschichten einer Leichtbauplatte oder einem Werkstoffkörper und der vierte Verleimabschnitt zum Verleimen mit einer Leichtbauplatte oder einem Werkstoffkörper ausgebildet.

Mittels eines Verleimkörpers mit drei Verleimabschnitten kann bspw. eine T-förmige Verbindung aus drei Bauteilen (Leichtbauplatten und/oder Werkstoffkörpern) hergestellt werden, die im Verbindungsbereich auf Gehrung zusammengesetzt sind. Dementsprechend kann mit einem Verleimkörper mit vier Verleimabschnitten eine kreuzförmige Verbindung aus vier Bauteilen (Leichtbauplatten und/oder Werkstoffkörpern) hergestellt werden, die im Verbindungsbereich auf Gehrung zusammengesetzt sind.

Wie bereits ausgeführt. weist der Verleimkörper einen mandelförmigen Querschnitt auf. Nach einer weiteren nicht-beanspruchten Ausführungsform ist der Verleimkörper leistenförmig ausgebildet. Dabei weist der Verleimkörper einen ersten Verleimabschnitt auf, der mit beiden Deckschichten verleimt wird, jedoch besonders schmal und besonders lang ausgebildet ist. Der leistenförmige Verleimkörper kann als einsatzgefräste Feder ausgebildet sein und kann im Bereich von wenigen Millimetern (bspw. 2 mm bis 10 mm, ohne die Breite des zweiten Verleimabschnittes) Breite ausgebildet sein, so dass dieser nur eine geringe Erstreckungstiefe in die Leichtbauplatte aufweist (die Höhe des leistenförmigen Verleimkörpers erstreckt sich in Richtung der Leichtbauplattenstärke).

Dafür erstreckt sich der leistenförmige Verleimkörper jedoch bspw. über die ganze Länge (zumindest weitestgehend über die ganze Länge) einer Seitenkante der Leichtbauplatte bzw. kann an den Endbereichen ausgesetzt sein. Der leistenförmige Verleimkörper weist somit ein bevorzugtes Breiten-Längenverhältnis von mindestens 1:20 vorzugsweise 1:50 oder 1:100 oder mehr auf.

Der zweite Verleimabschnitt ragt in Form einer Feder aus einer Stufenfläche heraus und weist ebenfalls nur eine geringe Breite (bspw. im Bereich von 2 mm bis 10 mm, bevorzugt bis bspw. der Deckstärke bzw. der ½ Deckstärke, in die sich die Feder erstreckt) auf. Der montierte zweite Verleimabschnitt erstreckt sich somit bspw. nur in eine wenige mm tiefe Nut im Werkstoffkörper.

Nach einer Weiterbildung der Erfindung weist der Verleimkörper im horizontalen Querschnitt eine mandelförmige Form auf. Unabhängig von der Form kann der Verleimkörper eine Länge zwischen 47 mm und 70 mm und eine Breite zwischen 17 mm und 34 mm aufweisen. So kann der Verleimkörper, insbesondere der mandelförmige Verleimkörper, beispielsweise ca. 47 mm lang und 17 mm breit oder ca. 62 mm lang und 27 mm breit oder ca. 70 mm lang und 34 mm breit sein. Länge und Breite stehen vorteilhafterweise in einem Verhältnis zwischen 1:2 his ca. 1:3.

Unabhängig von Form, Länge und Breite des Verleimkörpers stehen die Stärke und Länge des Verleimkörpers bevorzugt in einem Verhältnis zwischen 1:1 bis 1:10, besonders bevorzugt zwischen 1:1 bis 1:8, vorteilhafterweise zwischen 1:1 bis 1:5 und vorzugsweise zwischen 1:2 und 1:4. D.h., der Verleimkörper ist dübelartig aufgebaut und kann somit als örtlich begrenztes Befestigungsmittel ausgebildet sein, so dass üblicherweise über den zu verleimenden Abschnitten der Leichtbauplatte mehrere Verleimkörper nebeneinander angeordnet werden können.

Nach einer Weiterbildung der Erfindung weisen der erste Verleimabschnitt und der zweite Verleimabschnitt jeweils eine Verleimoberfläche auf, die in einem Winkel von 25° +-/ 5° bis 175° +/- 5°, insbesondere in einem Winkel von 90° +/- 5° bis 10° zueinander ausgerichtet sind. Derartige Verleimkörper ermöglichen die besonders einfache Herstellung von winkeligen Gehrungseckverbindungen.

Zum Herstellen von flächigen Stoßkantenverbindungen weisen besonders bevorzugt der erste Verleimabschnitt und der zweite Verleimabschnitt jeweils eine Verleimoberfläche auf, die fluchtend zueinander ausgerichtet sind. D.h., die beiden Verleimoberflächen weisen einen Winkel von 180° zueinander auf.

Für besonders feste Verbindungen von Leichtbauplatten mit Werkstoffkörpern kann alternativ zudem vorgesehen sein, dass bei einer Leichtbauplatte, die mindestens eine zwischen zwei Deckschichten angeordnete Mittellage aufweist, ein Verleimkörper einstückig mit einer Deckschicht/Decklage und/oder einer Mittellage/Mittelschicht der Leichtbauplatte, in der bspw. ein Vollmaterialabschnitt angeordnet ist, ausgebildet ist und einen zweiten Verleimabschnitt zum Verleimen mit einem Werkstoffkörper aufweist. Die Ausbildung des zweiten Verleimabschnitts kann entsprechend der vorbeschriebenen Ausführungen erfolgen. Hierdurch werden die auftretenden Kräfte besonders einfach und wirkungsvoll in die Deckschicht übertragen, so dass besonders sichere Verbindungen herstellbar sind.

Weiter wird die Aufgabe der Erfindung gelöst durch ein Verfahren gemäss Anspruch 13 zum Verleimen von mindestens einer Leichtbauplatte mit einem Werkstoffkörper, wobei die Leichtbauplatte mindestens eine zwischen zwei Deckschichten angeordnete Mittellage aufweist, mit folgenden Schritten:
- Erstellen einer auf die Form eines ersten Verleimabschnitts eines Verleimkörpers angepassten ersten Ausnehmung in der Mittellage/Mittelschicht der Leichtbauplatte, wobei die Ausnehmung an beide Deckschichten/Decklagen angrenzt oder zumindest in einer der Deckschichten zumindest teilweise angeordnet ist;
- Erstellen einer auf die Form eines zweiten Verleimabschnitts des Verleimkörpers angepassten Ausnehmung in dem Werkstoffkörper;
- Einführen eines ersten Verleimabschnitts des Verleimkörpers in die erste Ausnehmung und Verleimen des Verleimkörpers mit beiden Deckschichten;
- Einführen eines zweiten Verleimabschnitts des Verleimkörpers in die zweite Ausnehmung und befestigen, insbesondere Verleimen des zweiten Verleimabschnitts mit dem Werkstoffkörper,

Das erfindungsgemäße Verfahren ermöglicht, auf besonders einfache Weise Leichtbauplatten mit einer zwischen zwei Decklagen angeordneten Mittellage mit einem Werkstück oder auch Leichtbauplatten zu verleimen, ohne dass aufwendige Einsätze oder spezielle Beschläge zum Verbinden der einzelnen Leichtbauplatten in die Leichtbauplatte eingebracht werden müssen.

Somit ermöglicht das Verfahren auch, individuell zugeschnittene Leichtbauplatten mit Werkstoffkörpern bzw. mit Leichtbauplatten zu verleimen.

Unter dem Erstellen einer Ausnehmung in der Leichtbauplatte, die auf die Form eines ersten Verleimabschnitts ausgerichtet ist, wird verstanden, dass ausgehend von der Seitenkante der Leichtbauplatte eine Ausnehmung in die Leichtbauplatte eingebracht wird. Das Einbringen dieser Ausnehmung erfolgt bspw. mittels eines Fräs- oder Sägewerkzeugs und kann bspw. mittels eines Lamellofräswerkzeuges erfolgen, sofern der Verleimkörper entsprechend auf die Größe der bekannten flachen Lamellodübel ausgerichtet ist. Die Ausnehmung kann dabei entweder in einem Arbeitsschritt, d. h. mit bspw. einer breiten Frässcheibe, die in die Seite der Leichtbauplatte eingeführt wird, erzeugt werden.

Die Ausnehmung kann jedoch bevorzugt auch derart erfolgen, dass bspw. mittels eines Lamellofräswerkzeuges zwei Teilausnehmungen, jeweils eine pro Deckschicht, erzeugt werden, wobei jede Teilausnehmung an die Innenseite einer der Deckschichten angrenzt bzw. in diese hineinragt. So ist es bspw. möglich, mit einem Lamellofräswerkzeug zwei Fräsungen vorzunehmen, jeweils ausgehend von der Außenfläche jeder Deckschicht, so dass in der Leichtbauplatte zwei gegenüberliegende Teilausnehmungen in jeder Deckschicht angeordnet sind. Die beiden Teilausnehmungen bilden die Ausnehmung. Dabei ist der vertikale Abstand der Oberflächen der Teilausnehmungen auf die Stärke des Verleimkörpers und hier auf den ersten Verleimabschnitt angepasst.

Entsprechend der ersten Ausnehmung kann auch die zweite Ausnehmung in den Werkstoffkörper angeordnet werden, sofern es sich bei diesem ebenfalls um eine Leichtbauplatte handelt.

Bei einem Massivmaterial, d. h. bspw. einer Platte aus Vollmaterial, wird entsprechend der Ausformung des zweiten Verleimabschnitts eine entsprechende Nut oder Ausnehmung eingebracht. Sofern der zweite Verleimabschnitt bspw. halbmandelförmig an die Form eines halben Lamellodübels angepasst ist, wird auf besonders einfache Weise mittels eines Lamellofräswerkzeuges ein Schlitz entweder an einer Außenseite des Werkstoffkörpers oder auch in eine Stirnseite des Werkstoffkörpers eingeformt, bspw. auch eingefräst oder eingebohrt.

Bei dem Einführen des ersten Verleimabschnitts wird bspw. die Mittellage der Leichtbauplatte mit dem Verleimkörper weggedrückt, sofern es sich um eine bewegbare Mittellage handelt. So ist dies bspw. möglich bei Mittellagen aus einem Wabenmaterial aus Pappe oder Papier. Sofern die Ausnehmung als Ganzes ausgefräst wurde, kann der erste Verleimabschnitt besonders einfach in die Ausnehmung eingeführt werden.

Vor dem Einführen wird entweder im Bereich der Ausnehmung und/oder an dem ersten Verleimabschnitt das Klebemittel (der Leim) aufgetragen. Aufgrund der Abstimmung der Ausnehmung auf den ersten Verleimabschnitt wird der erste Verleimabschnitt mit beiden Deckschichten und insbesondere hier mit den Oberflächen der Ausnehmungen in den jeweiligen Innenseiten der Deckschichten verleimt. Vor dem Einführen des zweiten Verleimabschnitts in die zweite Ausnehmung (des Werkstoffkörpers) wird ebenfalls entweder der zweite Verleimabschnitt und/oder die zweite Ausnehmung mit Leim benetzt. Anschließend wird der zweite Verleimabschnitt in die zweite Ausnehmung eingeführt und ebenfalls mit diesem verleimt.

Sofern der Werkstoffkörper ebenfalls eine Leichtbauplatte ist und mittels der Leichtbauplatte und des Werkstoffkörpers (der zweiten Leichtbauplatte) eine T-förmige Verbindung oder eine Eckverbindung hergestellt werden soll, wird bei der Herstellung der zweiten Ausnehmung diese so tief in die Platte in Richtung der Plattenstärke eingebracht, dass die Ausnehmung an die Oberfläche der Innenseite der dem Verleimkörper gegenüberliegenden Deckschicht angrenzt oder bis in diese hinein ggf. sogar durch diese hindurch ragt. Dementsprechend wird beim Auftragen des Leims auch bis an die Innenseite der gegenüberliegenden Deckschicht bzw. in der hier jetzt vorhandenen Nut Leim angeordnet bzw. der zweite Verleimabschnitt wird derart mit Leim benetzt, dass eine Leimverbindung zwischen dem zweiten Verleimabschnitt und der gegenüberliegenden Deckschicht ausgebildet wird.

In einer bevorzugten Ausführungsform weist der Verleimkörper zwischen dem ersten Verleimabschnitt und dem zweiten Verleimabschnitt eine Stufe auf, die eine Stufenfläche aufweist. Bei einem derartigen Verleimkörper wird nach einer Weiterbildung der Erfindung die Stufenfläche des Verleimkörpers mit einer Seitenkante oder einer Oberfläche des Leichtbauwerkstoffs bündig angeordnet. Hierdurch wird eine besonders sichere Anlage des Werkstoffkörpers an der Leichtbauplatte gewährleistet.

Um die Verbindung zwischen der Leichtbauplatte und dem Werkstoffkörper weiter zu verbessern, wird nach einer Weiterbildung der Erfindung die Stufenfläche des Verleimkörpers mit einer Fläche des Werkstoffkörpers, insbesondere mit einer Außenseite oder einer Seitenkante verleimt. Hierdurch wird die Klebefläche zwischen der Leichtbauplatte und dem Werkstoffkörper deutlich erhöht, so dass auch die Werkstoffkörperverbindung eine deutlich erhöhte Festigkeit aufweist.

Nach einer Weiterbildung der Erfindung ist der Werkstoffkörper ein zweiter Leichtbauwerkstoff mit mindestens einer zwischen zwei Deckschichten angeordneten Mittelschicht, wobei dieser insbesondere auch als Leichtbauplatte ausgebildet sein kann, sodass insbesondere auch der zweite Verleimabschnitt mit beiden Deckschichten des Werkstoffkörpers verleimt wird.

Dies erfolgt sowohl bei einer Verleimung der Seitenkanten als auch einer Seitenkante der Leichtbauplatte mit einer Fläche des Werkstoffkörpers. Durch die Verleimung des zweiten Verleimabschnitts mit beiden Deckschichten des Werkstoffkörpers wird eine besonders sichere und stabile Verbindung hergestellt und die auftretenden Kräfte auf der Verbindung werden zuverlässig sowohl auf die beiden Deckschichten der Leichtbauplatte als auch auf die beiden Deckschichten des hier jetzt auch als Leichtbauplatte ausgebildeten Werkstoffkörpers übertragen.

Weiter wird die Erfindung gelöst durch eine Werkstoffverbindung zum Verbinden einer Leichtbauplatte mit einem Werkstoffkörper, wobei die Leichtbauplatte eine zwischen zwei Decklagen/Deckschichten angeordnete Mittellage/Mittelschicht aufweist, ein einstückiger Verleimkörper angeordnet ist, der mindestens zwei Verleimabschnitte, einen ersten und einen zweiten Verleimabschnitt, aufweist, der Verleimkörper mit dem ersten Verleimabschnitt mit den zwei Deckschichten der Leichtbauplatte verleimt ist und der zweite Verleimabschnitt in einer Ausnehmung des Werkstoffkörpers angeordnet und befestigt ist.

Die Werkstoffkörperverbindung wurde bereits umfangreich im Zusammenhang mit dem Verleimkörper und dem Verfahren beschrieben. Anzumerken ist, dass die Ausnehmung den Werkstoffkörper bspw. auch vollständig durchsetzen kann und der zweite Verleimabschnitt durch den Werkstoffkörper bspw. hindurch ragt und am Werkstoffkörper ausschließlich befestigt ist. Dies kann bspw. als besonderes dekoratives Element eingesetzt werden. Der zweite Verleimabschnitt kann dementsprechend bspw. an dem aus dem Werkstoffkörper herausragenden Abschnitt mit dem Werkstoffkörper verkeilt werden. Auch kann der Verleimabschnitt bspw. ein Harpunenstegprofil aufweisen, so dass der zweite Verleimabschnitt aus dem Werkstoffkörper nicht herausziehbar ist. Letztlich ist es selbstverständlich auch möglich, den zweiten Verleimabschnitt mit dem zweiten Werkstoffkörper zu verleimen.

Die erfindungsgemäße Werkstoffkörperverbindung ermöglicht somit, wie bereits ausgeführt, eine besonders einfache Verbindung einer Leichtbauplatte mit einem weiteren Werkstoffkörper, der sowohl ebenfalls als Leichtbauwerkstoff, bspw. Leichtbauplatte, oder auch aus einem Vollmaterial, insbesondere einem Holzwerkstoff, ausgebildet sein kann.

Besonders bevorzugt weist der Verleimkörper einen gestuften Querschnitt auf und der Verleimkörper ist insbesondere mit einer unterschiedlichen Stärke und/oder einer Stufe zwischen den Verleimabschnitten ausgebildet. Aufgrund der gestuften Ausführungsform können sowohl Leichtbauplatten mit Leichtbauplatten als auch Leichtbauplatten mit Massivmaterial besonders einfach miteinander verleimt werden. Dies kann insbesondere mit bekannten Werkzeugen, wie bspw. einer Fräse für Lamellodübel, erfolgen.

Neben der Verleimung des ersten bzw. zweiten Verleimabschnitts mit der Leichtbauplatte bzw. dem Werkstoffkörper ist nach einer Weiterbildung der Erfindung vorgesehen, dass eine Stufenfläche des Verleimkörpers mit einer Fläche, insbesondere einer Oberfläche insbesondere einer außen liegenden Oberfläche des Werkstoffkörpers, bspw. auch einer Seitenkante des Werkstoffkörpers, verleimt ist. Hierdurch wird die Werkstoffkörperverbindung deutlich fester ausgebildet und kann erheblich höhere Kräfte aufnehmen.

Die zum Verleimen mit den Deckschichten der Leichtbauplatte ausgebildeten Oberflächenabschnitte können parallel zueinander angeordnet sein. Insofern weist besonders bevorzugt der erste Verleimabschnitt zwei Oberflächenabschnitte auf, die parallel zueinander angeordnet sind, wobei jeder Oberflächenabschnitt jeweils mit einer der Deckschichten verleimt ist. Hierdurch wird eine besonders sichere und haltbare Verleimung des Verleimkörpers mit den beiden Deckschichten der Leichtbauplatte gewährleistet.

Nach einer Weiterbildung der Erfindung ist ferner vorgesehen, dass die Werkstoffkörperverbindung zwischen der Leichtbauplatte und dem Werkstoffkörper eine Winkelverbindung ≠ 180° ist, wobei der zweite Verleimabschnitt durch eine Deckschicht und eine Mittellage eines als Leichtbauplatte ausgebildeten Werkstoffkörpers ggf. bis in oder an eine zweite Deckschicht des Werkstoffkörpers ragt und insbesondere mit beiden Deckschichten des Werkstoffkörpers verleimt ist.

Die Befestigung des zweiten Verleimabschnitts an dem Werkstoffkörper kann bspw. auch neben der vorgenannten Verkeilung über ein mechanisches Verbindungsmittel, wie bspw. eine Schraubverbindung, erfolgen. Besonders bevorzugt ist jedoch zwischen dem Werkstoffkörper und der Leichtbauplatte ausschließlich eine Klebeverbindung ausgebildet, wobei insbesondere zwischen dem ersten Verleimabschnitt und der Leichtbauplatte und/oder zwischen dem zweiten Verleimabschnitt und dem Werkstoffkörper eine Klebeverbindung vorliegt. Die Klebeverbindung mit den vorher erstellten Ausnehmungen ermöglicht ein besonders präzises Zusammenfügen der Leichtbauplatte mit dem Werkstoffkörper und nimmt alle Vorteile der bereits bekannten Lamellodübelverbindungen in Anspruch.

Insbesondere zur Ausbildung einer Eckverbindung bzw. einer Gehrungseckverbindung ist nach einer Weiterbildung der Erfindung vorgesehen, dass der zweite Verleimabschnitt in einem Winkel α ≠ 180°, insbesondere in einem Winkel α = 25° - 175°, bevorzugt in einem Winkel α = 90° ± 1-2° ausgerichtet zu den Deckschichten angeordnet ist.

Weitere Ausführungen der Erfindung können folgende Merkmale für sich oder ergänzend zu den vorgenannten Merkmalen aufweisen:
- die Verleimoberflächen können strukturiert sein, um bspw. eine bessere Leimhaftung zu gewährleisten;
- der Verleimkörper kann mindestens im Bereich des ersten Verleimabschnittes in Vertikalrichtung elastisch ausgebildet sein, um das Einführen in die Ausnehmung zu erleichtern, eine leichte Verspannung beim Verleimen zu bewirken und Maßdifferenzen auszugleichen, wobei unter elastisch in diesem Sinne von Hand zusammendrückbar bedeutet;
- leistenförmige Verleimkörper können als endloses Rollenmaterial ausgebildet sein, wobei der Verleimkörper bspw. ABS, insbesondere extrudiertes ABS umfassen kann;
- die leistenförmigen Verleimkörper können bspw. mittels einer Kantenanleimvorrichtung an eine Seitenkante der Leichtbauplatte angeleimt werden.

Obwohl manche Aspekte im Zusammenhang mit einem Verleimkörper und/oder einer Werkstoffkörperverbindung beschrieben wurden, versteht es sich, dass diese Aspekte auch eine Beschreibung des entsprechenden Verfahrens darstellen, so dass ein Block- oder ein Bauelement eines Verleimkörpers und/oder einer Werkstoffkörperverbindung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals eines entsprechenden Verleimkörpers und/oder einer Werkstoffkörperverbindung dar. Dementsprechend sind auch Merkmale, die im Zusammenhang mit dem Verleimkörper beschrieben wurden, als Merkmale der Werkstoffkörperverbindung zu verstehen und umgekehrt. Einige oder alle der Verfahrensschritte können durch einen Hardware-Apparat (oder unter Verwendung eines Hardware-Apparates), wie z. B. einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Im Weiteren wird die Erfindung Anhang von Ausführungsbeispielen beschrieben: Es zeigen:
- Fig. 1 bis 4b
- Verleimkörper mit unterschiedlichen Querschnittsprofilen zum Verbinden einer Leichtbauplatte und einer Werkstoffplatte zum Herstellen einer stumpfen Verbindung;
- Fig. 5 bis 17
- alternative nicht-erfindungsgemässe Ausführungsformen des Verleimkörpers;
- Fig. 18 bis 32
- nicht-erfindugsgemässe Verleimkörper zum Herstellen von Gehrungsverbindungen:
- Fig. 33 bis 40
- nicht-erfindungsgemässe Verleimkörper, die einstückig mit einer Deckschicht oder einer Mittelschicht ausgebildet sind:
- Fig. 41.1 bis 50.25
- weitere mögliche nicht-erfindungsgemässe Ausführungsformen des Verleimkörpers und der Werkstoffkörperverbindung

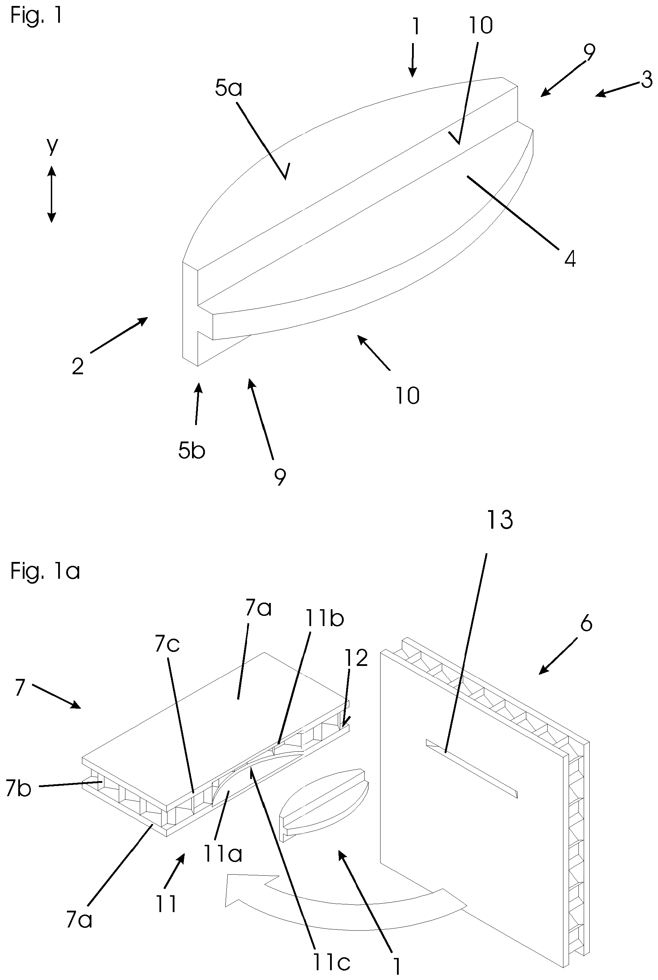

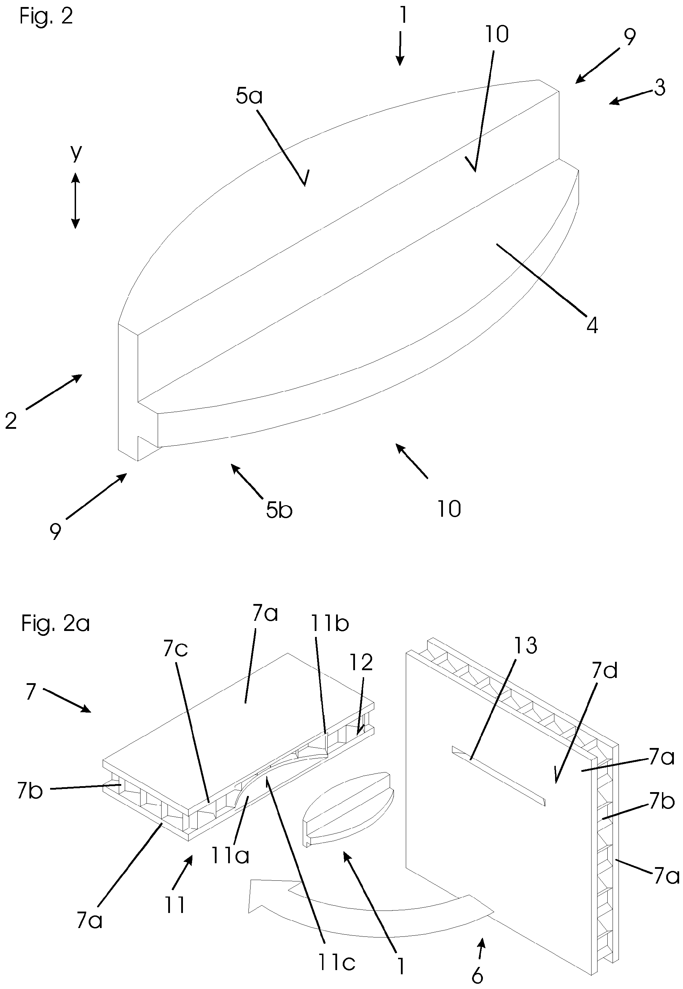

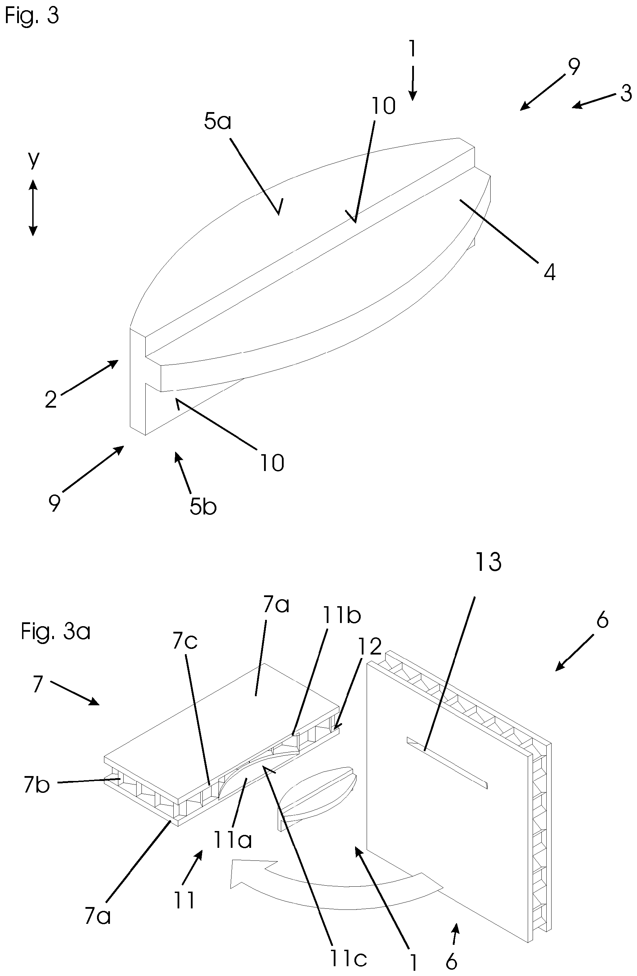

Fig. 1-4b zeigen den erfindungsgemäßen Verleimkörper 1 und eine jeweilige Einbausituation, in der der Verleimkörper 1 verwendet werden kann.

Die Fig. 1 , 2, 3 und 4 zeigen den Verleimkörper 1 mit einem ersten Verleimabschnitt 2 und einem zweiten Verleimabschnitt 3, der hier als Lamelle 4 ausgebildet ist. Der erste Verleimabschnitt 2 weist zwei Verleimoberflächen 5a, 5b auf, die parallel zueinander angeordnet sind und zum Verleimen mit den Deckschichten 7a der Leichtbauplatte 7 ausgebildet sind.

Der Abstand der beiden Verleimoberflächen 5a, 5b ist auf die erzeugte Tiefe der Ausnehmungen 11a, 11b an den Innenseiten der Leichtbauplatte 7 abgestimmt, so dass die Verleimoberflächen 5a, 5b im eingebauten Zustand jeweils mit einer Deckschicht 6a, 6b der Leichtbauplatte verleimt sind.

Aufgrund der unterschiedlichen Stärken des ersten Verleimabschnitts 2 und des zweiten Verleimabschnitts 3 ist eine Stufe 9 zwischen dem ersten Verleimabschnitt 2 und dem zweiten Verleimabschnitt 3 ausgebildet.

Die Stufe 9 weist eine Stufenfläche 10 auf. Die Stufenfläche 10 ist in einem Winkel von 90° zu den Verleimoberflächen 5a, 5b angeordnet. Der als Lamelle 4 ausgebildete zweite Verleimabschnitt 3 erstreckt sich ausgehend von der Stufenfläche 10 parallel zu den beiden Verleimoberflächen 5a, 5b jedoch in entgegengesetzte Richtung.

Die Lamelle 4 weist eine Stärke von 4 mm ± max. 0,3 mm auf. Die Anordnung der Lamelle 4 in Y-Richtung, d. h. an der Stufenfläche, erfolgt auf unterschiedlichen Höhen.

Bei Fig. 1 ist eine mittige Position, bei der die ober- und unterhalb entstehenden Stufenflächen 10 gleich groß sind, dargestellt.

In Fig. 2 ist eine Anordnung 2/3 zu 1/3 dargestellt, d. h., die eine der Stufenflächen 10 ist doppelt so groß wie die andere
In Fig. 3 zeigt dagegen eine Anordnung der Lamelle in einem Verhältnis 3/4 zu 1/4, d. h., die größere der beiden Stufenflächen 10 ist dreimal so groß wie die kleinere der beiden Stufenflächen 10.

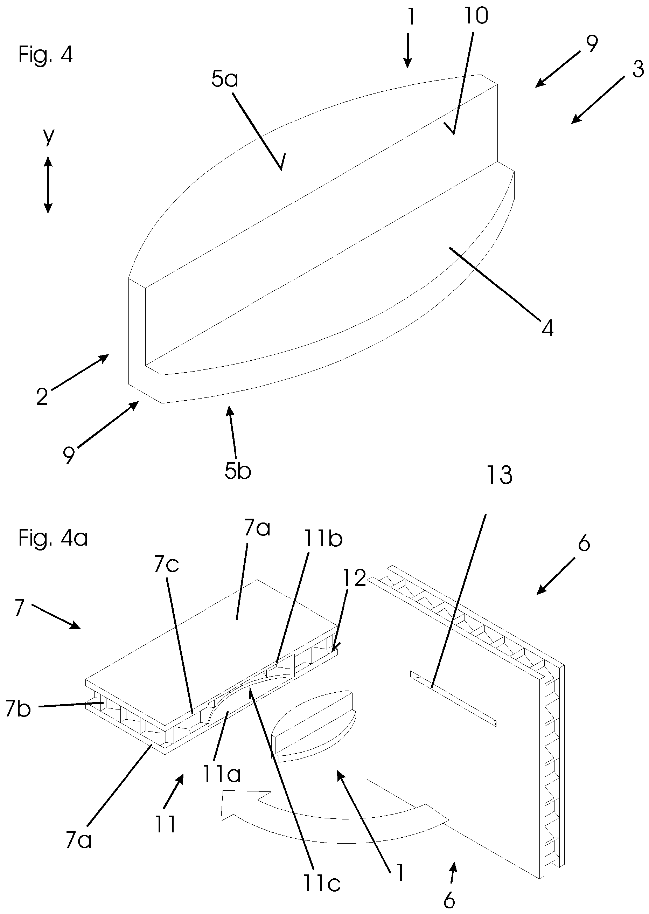

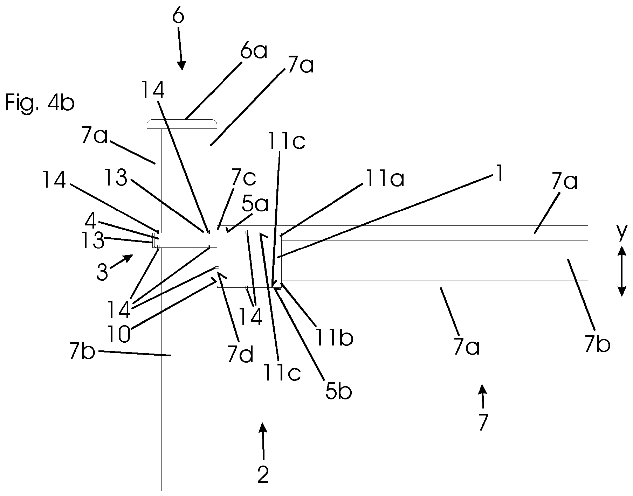

Letztlich zeigt Fig. 4 eine Ausführungsform, bei der die Lamelle 4 flächenbündig mit einer Verleimoberfläche 5b angeordnet ist. Die Stufenfläche 10 ist dementsprechend nicht geteilt.

Die Verleimkörper 1 sind hier aus einem Fasermaterial, hier einem Hartfasermaterial, hergestellt. Alternativ können die Verleimkörper bspw. auch aus einem Spanmaterial, OSB-Material, aus Massivholz, Kunststoff oder einem WPC-Material ausgebildet sein. Selbstverständlich kann der Verleimkörper auch aus Kombinationen der vorgenannten Materialien bestehen.

Jeder der gezeigten Verleimkörper ist einstückig ausgebildet, d. h., seine einzelnen Bauteile sind nicht zerstörungsfrei trennbar. Somit wurde der Verleimkörper entweder als Ganzes aus einem Material hergestellt oder es wurden die verschiedenen Bauteile so miteinander verbunden, dass diese nicht zerstörungsfrei voneinander lösbar sind

Die dargestellten Verleimkörper 1 weisen in einem horizontalen Querschnitt (X-Z-Ebene) durch den ersten und zweiten Verleimabschnitt 2, 3 eine mandelförmige Form auf, die der Form und Größe eines bekannten flachen Lamellodübels entspricht. Daher können die Verleimkörper 1 besonders einfach mit handelsüblichen und vorhandenen Fräswerkzeugen, wie bspw. Lamellofräsen, verwendet werden.

Die Fig. 1a, 2a , 3a und 4a zeigen jeweils in perspektivischer Darstellung ein Anwendungsbeispiel des jeweiligen Verleimkörpers 1. Dabei ist jeweils eine Leichtbauplatte 7 bereitgestellt. Die Leichtbauplatte 7 weist zwei Deckschichten 7a auf, mit einer zwischen den Deckschichten angeordneten Mittellage 7b. Die Mittellage 7b ist jeweils aus einem Material, das gegenüber den Deckschichten 7a ein deutlich geringeres spezifisches Gewicht aufweist. Die Mittellage 7b besteht hier aus einer Wabenplatte aus Karton bzw. Pappe.

Zum Einsetzen und Verbinden des Verleimkörpers 1 wurde eine Ausnehmung 11 an der Leichtbauplatte 7 erstellt. Diese wurde hier mittels zweier Fräsgänge mit einem Lamellofräswerkzeug erzeugt. Dabei wurden jeweils an den Innenseiten der Deckschicht 7 Teilausnehmungen 11a, 11b erzeugt. Die Teilausnehmungen 11a, 11b wurden mit einer üblichen von Hand bedienbaren Lamellofräse erzeugt. Dabei war die Lamellofräse derart eingestellt, dass neben der Mittellage ein 1 mm starker Abschnitt der Innenseite der Deckschichten 7a entfernt wurde. Die beiden Teilausnehmungen 11a, 11b sind somit in exakt gegenüberliegender Position der jeweiligen Deckschichten 7a, 7b angeordnet.

Der Abstand der Oberflächen 11c der beiden Teilausnehmungen 11a, 11b entspricht der Stärke des ersten Verleimabschnitts 2 des Verleimkörpers 1. Der Abstand kann auch so eingestellt werden, dass er um wenige zehntel Millimeter größer ist als die Stärke des ersten Verleimabschnitts, damit der Lamello besonders einfach zwischen die beiden Deckschichten geleimt werden kann. Alternativ kann er auch um wenige zehntel Millimeter kleiner sein als die Stärke des ersten Verleimabschnitts, damit der Verleimkörper 1 eingeklemmt wird.

Im eingebauten Zustand ist die Stufenfläche 10 mit der Seitenkante 7c der Leichtbauplatte 7 bündig angeordnet.

Der Werkstoffkörper 6 ist hier ebenfalls als Leichtbauplatte ausgebildet und entspricht im strukturellen Aufbau der Leichtbauplatte 7. Zwischen der Leichtbauplatte 7 und dem Werkstoffkörper 6 soll eine T-Verbindung bzw. Eckverbindung hergestellt werden. Hierfür weist der Werkstoffkörper 6 in einer seiner Deckschichten 7a eine schlitzförmige Ausnehmung 13 auf. Die schlitzförmige Ausnehmung 13 ist in ihrer Länge an die Lamelle 4 angepasst und geringfügig länger als die Lamelle 4. Die schlitzförmige Ausnehmung 13 erstreckt sich in Richtung der Tiefe des Werkstoffkörpers 6. Die Breite der schlitzförmigen Ausnehmung 13 ist an die Stärke der Lamelle 4 angepasst und um wenige zehntel Millimeter dicker als die Stärke der Lamelle 4.

Zum Herstellen der T-Verbindung bzw. Eckverbindung wird ein Klebemittel (auch Leim genannt) auf die Oberflächen 11c der Teilausnehmungen 11a, 11b und/oder die Leimoberflächen 5a, 5b des Verleimkörpers aufgetragen und der Verleimkörper 1 wird zwischen die beiden Deckschichten 7a der Leichtbauplatte 7 eingeführt, so dass die beiden Verleimoberflächen 5a, 5b mit den Oberflächen 11c der Teilausnehmungen 11a, 11b verleimt werden. Der Verleimkörper 1 wird dabei derart angeordnet und verleimt, dass die Stufenfläche 10 bündig mit der Seitenkante 7c der Leichtbauplatte 7 ist. Anschließend wird der Verleimkörper im Bereich der schlitzförmigen Ausnehmungen 13 angeordnet. Dabei wird der Leim nicht nur im Bereich der Deckschicht 7a, in der die schlitzförmige Ausnehmung 13 ist, sondern auch im Bereich der gegenüberliegenden Deckschicht 7a angeordnet.

Alternativ oder zusätzlich kann zudem Leim an der Lamelle 4 und/oder an den Stufenflächen 10 des Verleimkörpers angeordnet werden. Zum Herstellen der T-Verbindung/ Eckverbindung wird der Werkstoffkörper 6 mit der schlitzförmigen Ausnehmung 13 auf die Lamelle 4 aufgesteckt und der Werkstoffkörper wird im Bereich der schlitzförmigen Ausnehmung 13 ggf. zusätzlich im Bereich der Stufenfläche 10 und der Oberfläche 7d der Deckschicht 7 verleimt.

Fig. 4b zeigt einen Querschnitt einer hergestellten Eckverbindung (T-Verbindung) aus der Leichtbauplatte 7 und dem Werkstoffkörper 6 am Beispiel des in Fig. 4 dargestellten Verleimkörpers 1. Fig. 4b zeigt den Verleimkörper 1 im eingebauten Zustand, in dem die Verbindung zwischen der Leichtbauplatte 7 und dem Werkstoffkörper 6 hergestellt wird. Der Verleimkörper ist mit seinem ersten Verleimabschnitt 2 in der Leichtbauplatte 7 angeordnet. Die Stufenfläche 10 ist bündig mit der Seitenkante 7c. Die Stufenfläche 10 ist ferner mittels Leim 14 mit der Oberfläche 7d der Deckschicht 7a verleimt. Der zweite Verleimabschnitt 3 erstreckt sich ausgehend von der Stufenfläche 10 durch die angrenzende Deckschicht 7a, die Mittellage 7b bis in die gegenüberliegende Deckschicht 7a des Werkstoffkörpers 6.

Die schlitzförmige Ausnehmung 13 erstreckt sich ebenfalls durch die an den Verbindungskörper angrenzende Deckschicht 7a durch die Mittellage 7b bis in die gegenüberliegende Deckschicht 7a hinein.

Der erste Verleimabschnitt 2 ist im Bereich der Oberflächen 11c der Teilausnehmungen 11a, 11b mit seinen Verleimoberflächen 5a, 5b mittels Leim 14 verleimt. Der zweite Verleimabschnitt 3 ist ebenfalls über Leim 14 mit der an den Verleimkörper angrenzenden Deckschicht 7a und der gegenüberliegenden Deckschicht 7a und hier in der schlitzförmigen Ausnehmung 13 verleimt. Die schlitzförmige Ausnehmung 13 bildet in der gegenüberliegenden Deckschicht 7a eine Nut, in die der zweite Verleimabschnitt 3 hineinragt. Eine weitere Leimverbindung 14 liegt zwischen der Stufenfläche 10 und der Oberfläche 7d der Deckschicht 7a vor.

Eine mit den in Fig. 1 , 2 und 3 dargestellten Ausführungsformen hergestellte Verbindung wäre insofern mit der in Fig. 4b dargestellten Eckverbindung identisch, abgesehen davon, dass der zweite Verleimabschnitt 3, d. h. die Lamelle 4, eine entsprechend andere Anordnung des ersten Verleimabschnitts 2 aufweist. Hierdurch ist es bspw. möglich, die wirkenden Kräfte besser auf beide Deckschichten 7a der Leichtbauplatte 7 zu verteilen. Selbstverständlich können die jeweiligen Verleimkörper 1 auch in beide Richtungen, d. h. auch mit der Lamelle 4 von der Außenkante 6a des Werkstoffkörpers 6 wegzeigend angeordnet sein.

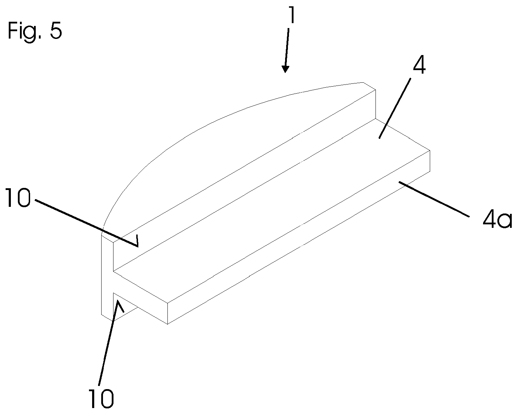

Die Figuren 5 bis 12a zeigen alternative Ausführungsformen des Verleimkörpers. Figur 5 zeigt einen Verleimkörper 1 mit einer eckigen Lamelle 4. Der Verleimkörper 1 weist einen gestuften Querschnitt mit Stufenflächen 10 auf. Die Lamelle 4 hat eine gerade Längskante 4a. Die Lamelle 4 ist mittig an der Stufenfläche 10 angeordnet. Im Weiteren entspricht der Verleimkörper 1 den Verleimkörpern 1 aus Figur 1 bis 4 .

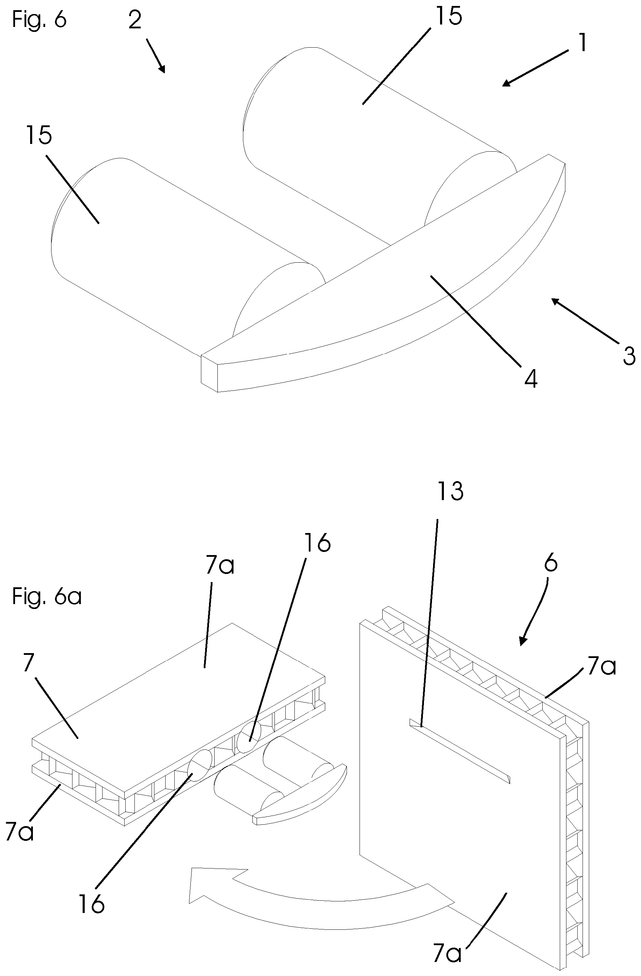

Figur 6 und 6a zeigen eine weitere alternative Ausführungsform des Verleimkörpers 1. Bei diesem ist entsprechend den Figuren 1 bis 5 wieder ein als plattenförmige Lamelle 4 ausgebildeter zweiter Verleimabschnitt 3 angeordnet. Der erste Verleimabschnitt 2 weist jedoch zwei Rundkörper auf, deren Durchmesser der Stärke des ersten Verleimabschnitts 2 entspricht, so dass die beiden Rundkörper 15 ebenfalls mit beiden Deckschichten der 7a Leichtbauplatte 7 verklebt werden.

Figur 6a zeigt in einer perspektivischen Darstellung den Verleimkörper 1 aus Figur 6 mit den für die Rundkörper angeordneten runden Ausnehmungen 16 in der Leichtbauplatte 7, die sich bis in beide Deckschichten 7a der Leichtbauplatte 7 erstrecken.

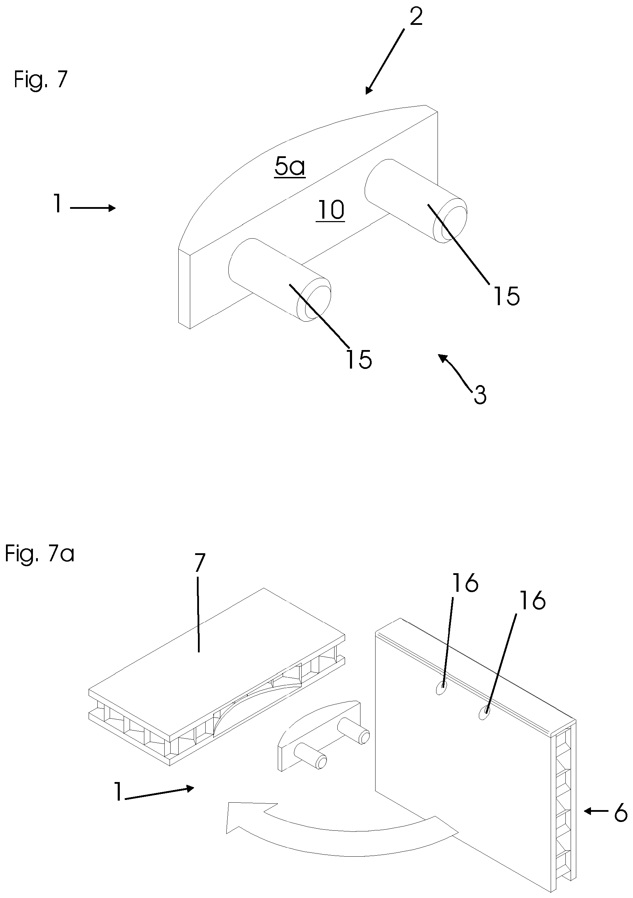

Figur 7 und Figur 7a zeigen in einer perspektivischen Darstellung eine weitere alternative Ausführungsform des Verleimkörpers, die entgegengesetzt zu der Ausführungsform aus Figur 6 ausgebildet ist. Bei der in Figur 7 gezeigten Ausführungsform entspricht der erste Verleimabschnitt 2 dem Verleimabschnitt aus den Figuren 1 bis 5 . Der zweite Verleimabschnitt wird hier durch zwei Rundkörper 15 gebildet, die zum Einführen in zwei runde Ausnehmungen 16 in den Werkstoffkörper 6 ausgebildet sind.

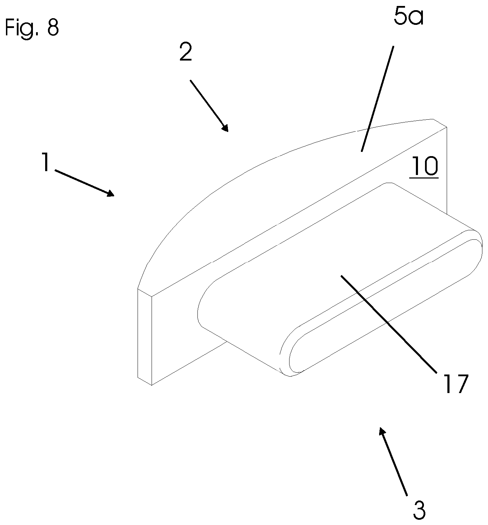

Figur 8 zeigt in einer perspektivischen Darstellung eine an die Figur 7 angelehnte Ausführungsform, bei der gegenüber der Figur 7 der zweite Verleimabschnitt 3 aus einem im Querschnitt ovalen Zapfen, der aus der Stufenfläche 10 herausragt, ausgebildet ist.

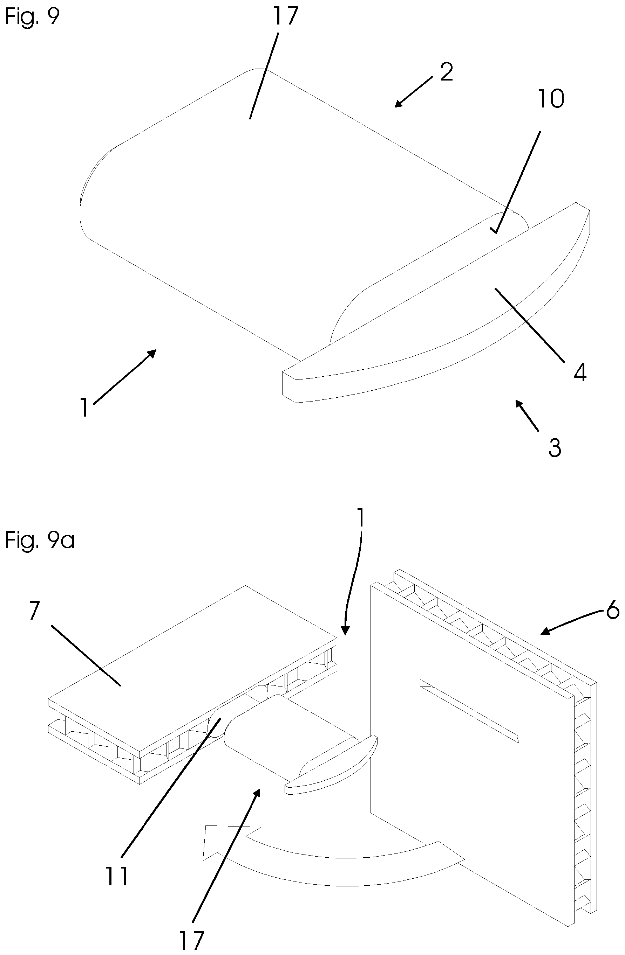

Dagegen ist die in Figur 9 dargestellte Ausführungsform des ersten Verleimabschnitts 2 als ovaler Zapfen 17 ausgebildet und der zweite Verleimabschnitt 3 als plattenförmige Lamelle 4 mit einem halb mandelförmigen Querschnitt. Der ovale Zapfen 17 ist dazu ausgebildet, mit beiden Deckschichten 7a der Leichtbauplatte 1 verleimt zu werden.

Figur 9a zeigt eine Leichtbauplatte 7 mit einer für den ovalen Zapfen 17 ausgebildeten Ausnehmung 11.

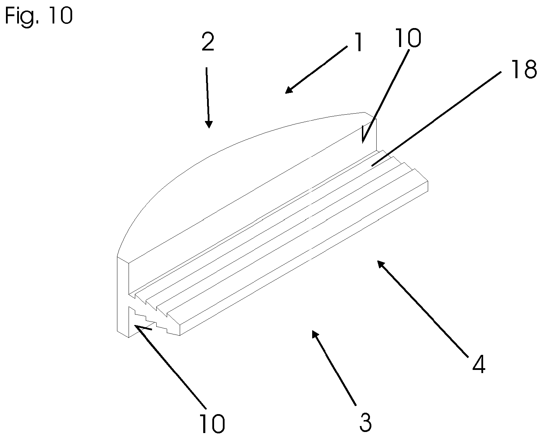

Figur 10 zeigt eine Ausführungsform des Verleimkörpers 1, der der Ausführungsform des in Figur 1 dargestellten Verleimkörpers 1 entspricht. Die einzige Änderung ist hier, dass die Lamelle 4 ein Harpunenstegprofil 18 aufweist, das das Herausziehen der Lamelle aus einer schlitzförmigen Ausnehmung 13 verhindert. Der in Figur 10 dargestellte Verleimkörper 1 kann insbesondere aus Kunststoff ausgebildet sein.

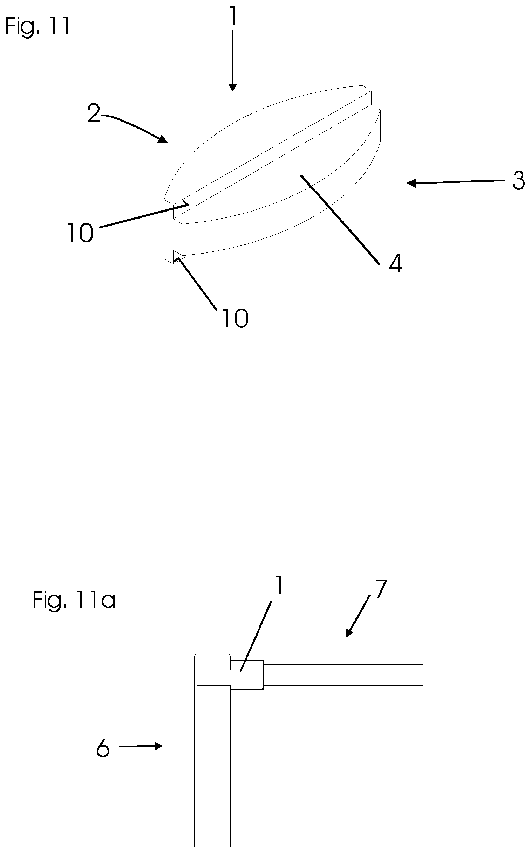

Figur 11 zeigt eine Ausführungsform des Verleimkörpers 1, bei dem der zweite Verleimabschnitt 3 als Lamelle 4 entsprechend der Figur 1 ausgebildet und angeordnet ist. Die Lamelle weist jedoch eine Stärke von 8 Millimetern +/- maximal 0,3 Millimeter auf. Über die verdickte Lamelle 4 kann eine besonders stabile Verbindung mit dem Werkstoffkörper 6 hergestellt werden.

Figur 11a zeigt in einem Querschnitt den in Figur 11 dargestellten Verleimkörper 1. Wie gut ersichtlich ist, ist dieser entsprechend dem Verleimkörper 1 aus Figur 1, 1a angeordnet und mit der Leichtbauplatte 7 und dem Werkstoffkörper 6 verleimt. Die in Figur 11a dargestellte Verbindung entspricht einer erfindungsgemäßen Werkstoffverbindung.

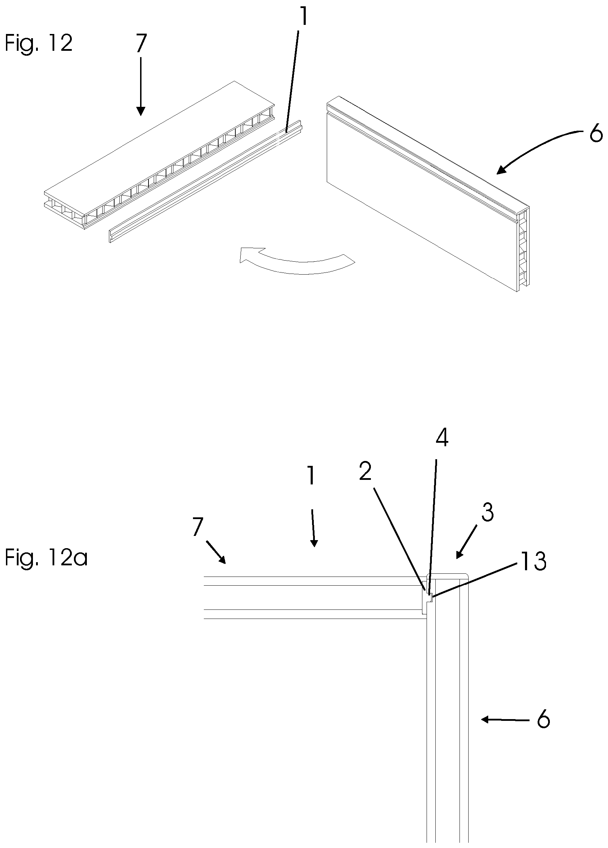

Figur 12 zeigt eine weitere Ausführungsform des Verleimkörpers 1. Der Verleimkörper ist leistenförmig ausgebildet und dazu vorgesehen, sich über die gesamte bzw. weitestgehend gesamte Seitenkante 7d der Leichtbauplatte 7 zu erstrecken.

Figur 12a zeigt in einem Querschnitt die Werkstückverbindung mit dem leistenförmigen Verleimkörper 1 aus Figur 12 . Dabei ist deutlich sichtbar, dass der erste Verleimabschnitt 2 mit seinen Verleimoberflächen 5a, 5b mit beiden Deckschichten 7a, 7b der Leichtbauplatte verbunden ist. Die Breite des Verleimkörpers 1 ist gegenüber den in Figur 1 bis 11 dargestellten Verleimkörpern 1 deutlich geringer und beträgt bspw. 4 mm. Der zweite Verleimabschnitt 3 ist als kurze Lamelle 4 mit einer Breite von bspw. 2 mm ausgebildet, die ausschließlich in die angrenzende Deckschicht 7a, und hier in eine in der angrenzenden Deckschicht angeordnete nutartige Ausnehmung 13 eingreift und mit dieser verleimt ist.

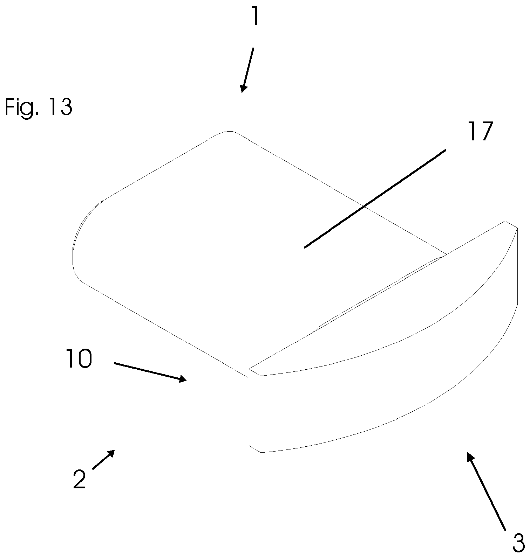

Die Figuren 13 bis 17 zeigen weitere spezielle Ausführungsformen des Verleimkörpers 1. Figur 13 zeigt in einer perspektivischen Darstellung einen Verleimkörper 1 zum Verbinden von zwei Leichtbauplatten 7, die jeweils eine zwischen 2 Deckschichten 7a angeordnete Mittellage 7b haben. Dabei sind der erste und der zweite Verleimabschnitt 2, 3 jeweils zum Verkleben mit beiden Deckschichten 7a ausgebildet. Hier ist der erste Verleimabschnitt als ovaler Zapfen 17 ausgeformt, während der zweite Verleimabschnitt 3 als im Querschnitt halb mandelförmige Lamelle 4 ausgebildet ist mit einer Stärke, die auf den Abstand der Verleimoberflächen 11c ausgerichtet ist.

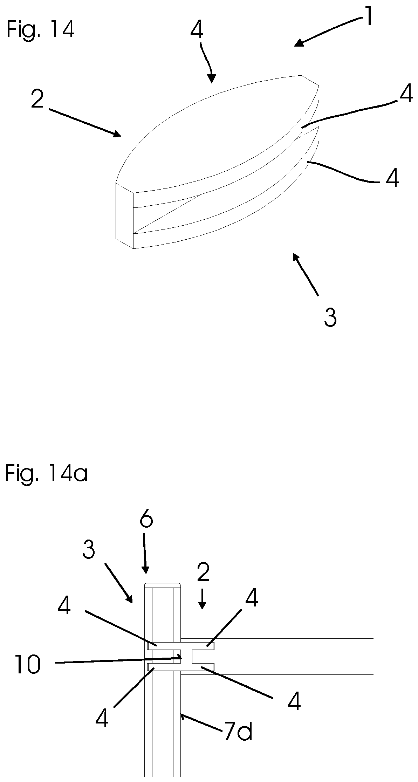

Figur 14 zeigt einen im horizontalen Querschnitt mandelförmig ausgebildeten Verleimkörper 1, der im vertikalen Querschnitt eine Doppel-T-Form aufweist. Dabei weist der erste Verleimabschnitt 2 zwei beabstandet zueinander angeordnete Lamellen 4 auf. Der zweite Verleimabschnitt 3 weist ebenfalls zwei Lamellen 4 auf. Die Lamellen 4 sind alle plattenförmig ausgebildet. Sie können wie hier bspw. eine Dicke von 4 Millimetern +/maximal 0,3 Millimetern aufweisen. Dabei ist jeweils eine Lamelle 4 des ersten Verleimabschnitts 2 und eine Lamelle 4 des zweiten Verleimabschnitts 3 außenseitig flächenbündig ausgebildet. Ferner ist eine Stufenfläche 10 vorhanden, an der die Deckschicht 7 eines Werkstoffkörpers 6 anliegt und ggf. mit dieser verleimt ist.

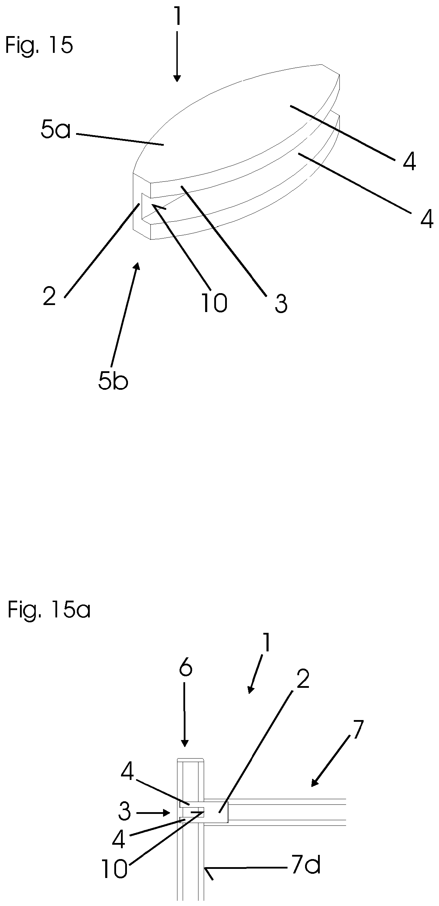

Figuren 15 und 15a zeigen einen im horizontalen Querschnitt ebenfalls mandelförmig ausgebildeten Verleimkörper 3. Bei diesem ist der erste Verleimabschnitt 2 ein massiver Bauteilabschnitt, welcher im horizontalen Querschnitt eine halb mandelförmige Form ausbildet. Hieran anschließend erstrecken sich zwei Lamellen des zweiten Verleimabschnitts 3, die im horizontalen Querschnitt ebenfalls halb mandelförmig ausgebildet sind. Die Verleimoberflächen 5a und 5b sind flächenbündig mit den Außenseiten jeweils einer der Lamellen 4 angeordnet.

Aus der Querschnittsdarstellung aus Figur 15a ist ersichtlich, dass der Verleimkörper 1 aus Figur 15 entsprechend bspw. der Verbindungskörper 1 aus Figur 1 bis 4 verwendet werden kann. Dabei werden jedoch anstatt einer zwei schlitzförmige Ausnehmungen 13 in den Werkstoffkörper 6 eingebracht, so dass die beiden Lamellen 4 des zweiten Verleimabschnitts 3 beide durch die an die Stufenfläche 10 angrenzende Deckschicht 7a, die Mittellage 7b bis in die gegenüberliegende Deckschicht 7a des Werkstoffkörpers 6 ragen.

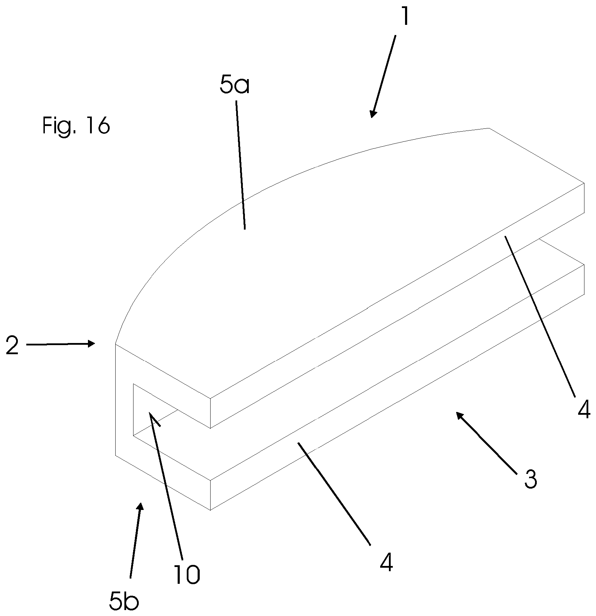

Figur 16 zeigt in einer perspektivischen Ansicht den Verleimkörper aus Figur 15 nur mit Lamellen 4, die im Querschnitt rechteckig sind und somit eine gerade Außenkante aufweisen.

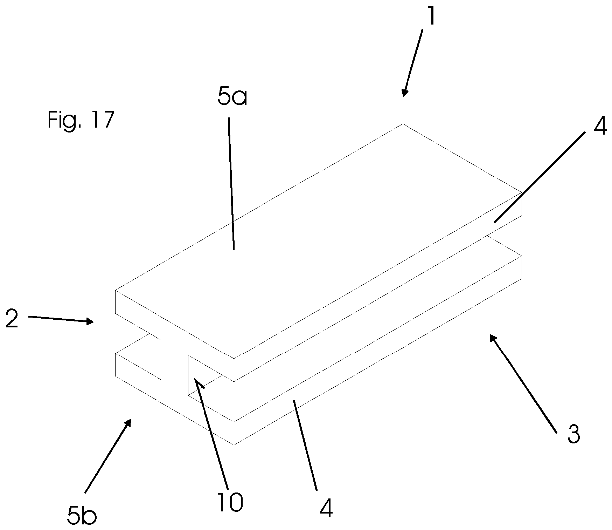

Figur 17 zeigt einen der Figur 14 entsprechenden Verleimkörper 1, bei dem sowohl die Lamellen 4 des ersten Verleimabschnitts 2 als auch die Lamellen 4 des zweiten Verleimabschnitts 3 nicht halbmandelförmig, sondern rechteckig ausgebildet sind, so dass sowohl die Außenkanten des ersten Verleimabschnitts 2 als auch die Außenkanten des zweiten Verleimabschnitts 3 gerade Seitenkanten aufweisen.

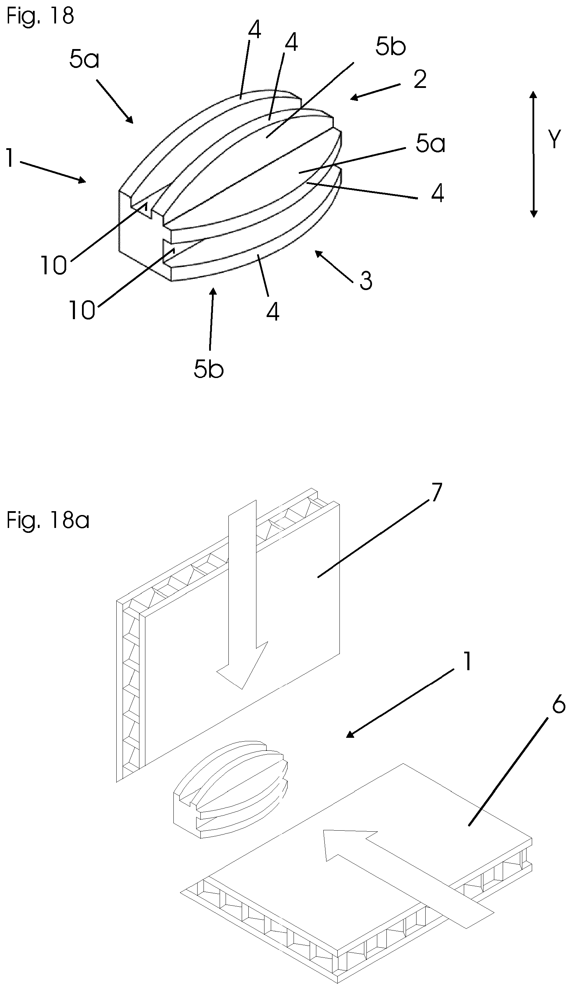

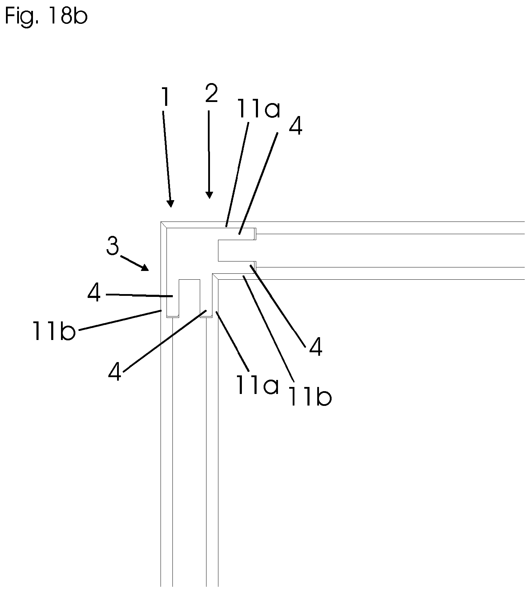

Die Figuren 18 bis 32 zeigen Verleimkörper zum Herstellen von Gehrungseckverbindungen, Gehrungs-T-Verbindungen und Gehrungs-Kreuzverbindungen, bei denen zumindest eine Leichtbauplatte 1 mit anderen Werkstoffkörpern 6, insbesondere Werkstoffplatten verbunden werden.

Figur 18 zeigt in einer perspektivischen Darstellung einen Verleimkörper 1 zum Herstellen einer Gehrungseckverbindung zwischen zwei Leichtbauplatten 7, die beide eine zwischen den Decklagen 7a angeordnete Mittellage 7b aufweisen. Der Verleimkörper 1 weist einen ersten Verleimabschnitt 2 auf, der zwei Lamellen 4 umfasst. Die Lamellen 4 ragen aus einer Stufenfläche 10 heraus und sind in Vertikalrichtung (Y-Richtung) ausgerichtet und parallel zueinander angeordnet. Die Lamellen 4 weisen eine halbmandelförmige Form auf.

Der zweite Verleimabschnitt 3 weist ebenfalls zwei Lamellen 4 auf, die in einem 90°-Winkel zu den Lamellen 4 des ersten Verleimabschnitts 2 ausgerichtet sind und ebenfalls aus einer Stufenfläche 10 herausragen. Jede Lamelle 4 ist jeweils plattenförmig ausgebildet und weist eine Stärke von 4 mm +/- maximal 0,3 mm auf.

Die Lamellen 4 des ersten Verleimabschnitts 2 weisen jeweils nach außen gerichtete Verleimoberflächen 5a, 5b zum Verleimen mit den Deckschichten 7a der Leichtbauplatte 7 auf.

Die Lamellen 4 des zweiten Verleimabschnitts 3 weisen ebenfalls Verleimoberflächen 5a, 5b zum Verleimen mit den Deckschichten 7a des Werkstoffkörpers 6 auf. Dabei weisen die Verleimoberflächen 5a, 5b des zweiten Verleimabschnitts 3 in Vertikalrichtung nach oben und unten.

Figur 18a zeigt, wie mittels des Verleimkörpers 1 aus Figur 18 eine besonders einfach herstellbare Gehrungseckverbindung zwischen der Leichtbauplatte 7 und dem Werkstoffkörper 6 hergestellt wird.

Figur 18b zeigt die mit dem Verleimkörper 1 aus Figur 18 und 18a herstellbare Werkstoffverbindung. Die Lamellen 4 sind jeweils in den Teilausnehmungen 11a, 11b der Deckschichten 4 angeordnet und im Bereich deren Oberflächen 11c mit diesen verleimt.

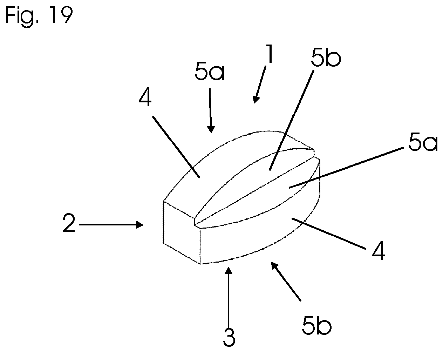

Figur 19 zeigt einen Verleimkörper 1, der den gleichen Verwendungszweck wie der Verleimkörper 1 aus Figur 18 bis 18b aufweist und somit ebenfalls zum Herstellen einer Gehrungseckverbindung zwischen zwei Leichtbauplatten 7 vorgesehen ist. Dabei weisen sowohl der erste Verleimabschnitt 2 als auch der zweite Verleimabschnitt 3 anstatt zwei plattenförmigen Lamellen 4 jeweils eine durchgängige Lamelle 4 mit einer Breite auf, die dem Abstand zwischen den Oberflächen 11c der Teilausnehmung 11a, 11b an den jeweiligen Deckschichten 7a entspricht.

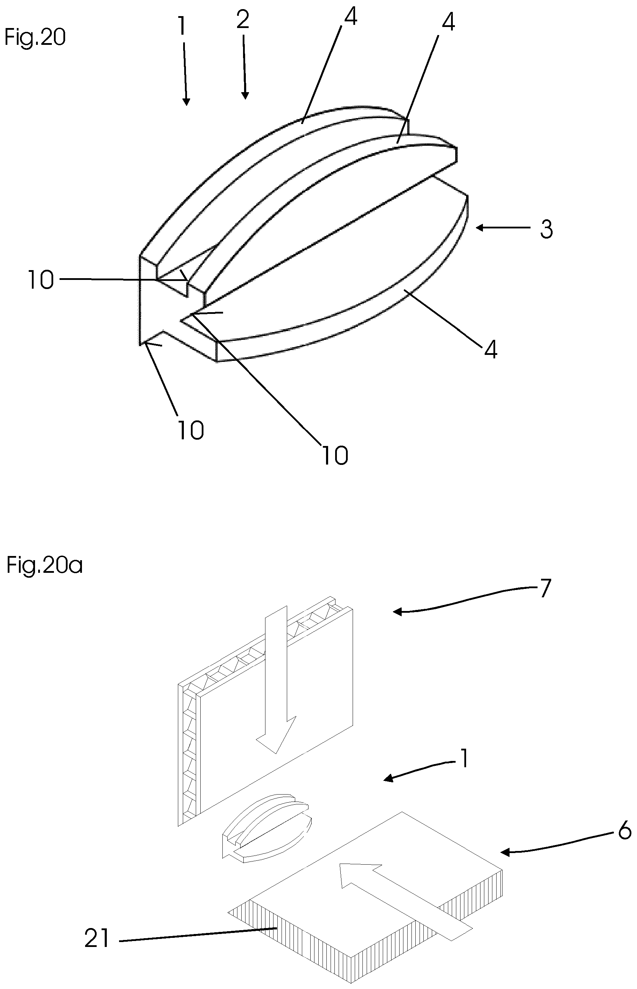

Figur 20 zeigt einen Verleimkörper 1, der zum Herstellen einer Gehrungsverbindung zwischen einer Leichtbauplatte 7 und einem Werkstoffkörper 6 ausgebildet ist, der zumindest im Bereich der Gehrung ein Vollmaterial 21 umfasst. Dabei kann der Werkstoffkörper 6 beispielsweise als Plattenvollmaterial ausgebildet sein. Auch kann der Werkstoffkörper 6 beispielsweise eine Leichtbauplatte sein, die im Bereich der Gehrung ein Vollmaterial 21 aufweist. Der Verleimkörper 1 weißt entsprechend des Verleimkörpers 1 aus Figur 18 im ersten Verleimabschnitt 2 zwei Lamellen 4 auf, wobei jede Lamelle4 jeweils eine Verleimoberfläche 5a, 5b zum Verleimen mit einer der Deckschichten 7a der Leichtbauplatte 7 umfasst.

Im Bereich des zweiten Verleimabschnitts 3 ist eine einzelne Lamelle 4 angeordnet, die in eine schlitzförmige Ausnehmung 13 im Vollmaterial des Werkstoffkörpers 6 angeordnet wird. Beide weisen eine halbmandelförmige Form mit einer entsprechend bogenförmigen Außenkante auf.

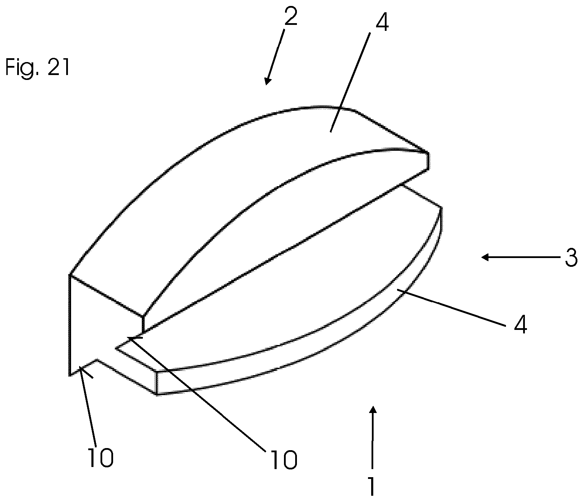

Figur 21 zeigt einen Verleimkörper 1, der entsprechend dem Verleimkörper 1 aus Figur 20 zum Herstellen einer Gehrungsverbindung zwischen einer Leichtbauplatte 7 und einem Werkstoffkörper 6 ausgebildet ist, wobei der Werkstoffkörper 6 zumindest im Bereich der Gehrung ein Vollmaterial umfasst. Der einzige Unterschied zum in Figur 20 gezeigten Verleimkörper 1 besteht darin, dass anstatt von zwei einzelnen, 4 mm starken Lamellen 4 eine besonders breite Lamelle 4 angeordnet ist, deren Breite dem Abstand der Oberflächen 11c der Teilausnehmung 11a, 11b an den Deckschichten 7a der Leichtbauplatte 7 entspricht.

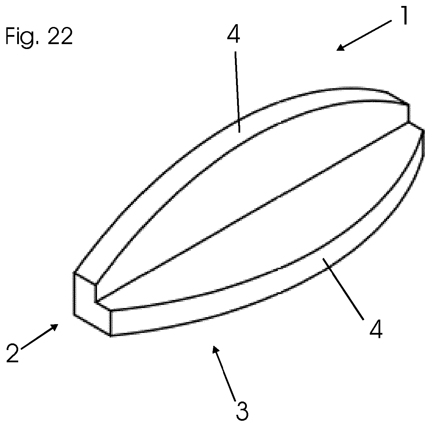

Figur 22 zeigt einen Verleimkörper 21, der zum Herstellen einer Gehrungsverbindung zwischen einer Leichtbauplatte 7 mit einem Vollmaterial im Bereich der Gehrung und einem Werkstoffkörper 6, der zumindest im Bereich der Gehrung ebenfalls als Vollmaterial ausgebildet ist, vorgesehen ist. Hierfür ist der Verleimkörper 1 als Eckwinkel ausgebildet und der erste Verleimabschnitt 2 und der zweite Verleimabschnitt 3 weisen jeweils eine Lamelle 4 auf, die hier jeweils halbmandelförmig geformt sind.

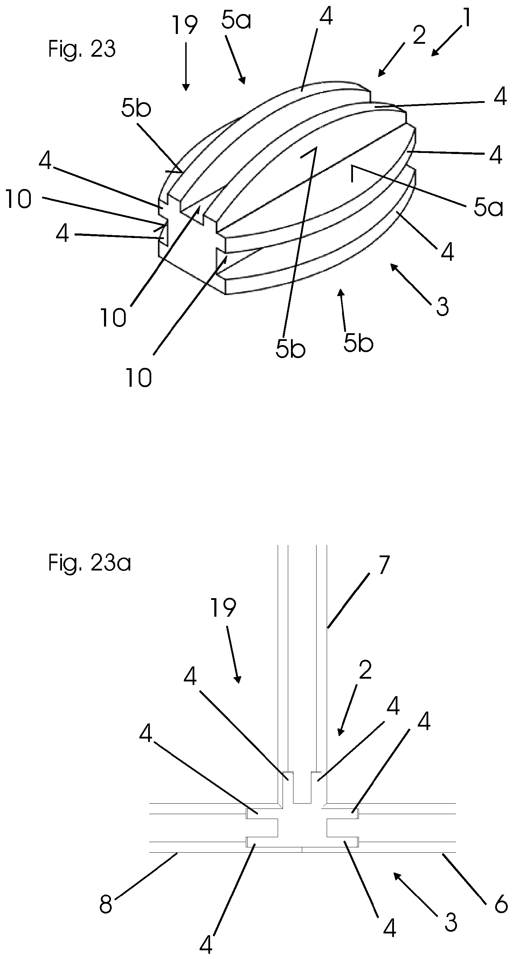

Die Figuren 23-27 zeigen alle Verleimkörper, die zum Herstellen einer T-förmigen Gehrungsverbindung vorgesehen sind. Bei T-förmigen Gehrungsverbindungen laufen drei Werkstoffkörper 6 aufeinander zu und sind im Bereich des Verleimkörpers miteinander verbunden. Dabei ist der Winkel zwischen dem mittleren Werkstoffkörper 6, hier beispielsweise einer Leichtbauplatte 7, und den beiden angrenzenden Werkstoffkörpern 6 beispielsweise 90°.

Figur 23 zeigt einen Verleimkörper 1, der in Anlehnung an den Verleimkörper 1 aus Figur 18 erstellt wurde, jedoch ergänzend einen dem zweiten Verleimabschnitt 3 gegenüberliegenden dritten Verleimabschnitt 19 aufweist. Der dritte Verleimabschnitt 19 ist identisch zum ersten Verleimabschnitt 2 und zweiten Verleimabschnitt 3 ausgebildet und ebenfalls zum Anordnen einer Gehrung einer Leichtbauplatte 7 mit einer zwischen zwei Deckschichten 7a angeordneten Mittellage 7c ausgebildet.

Figur 23a zeigt eine mit dem Verleimkörper 1 aus Figur 23 hergestellte Werkstoffkörperverbindung, die eine T-Form aufweist. Die beiden jeweiligen Lamellen 4 jedes Verleimabschnitts 2, 3, 19 ragen in die jeweilige Leichtbauplatte 7 hinein und sind im Bereich der erstellten Teilausnehmung 11a, 11b mit deren Oberflächen 11c verleimt.

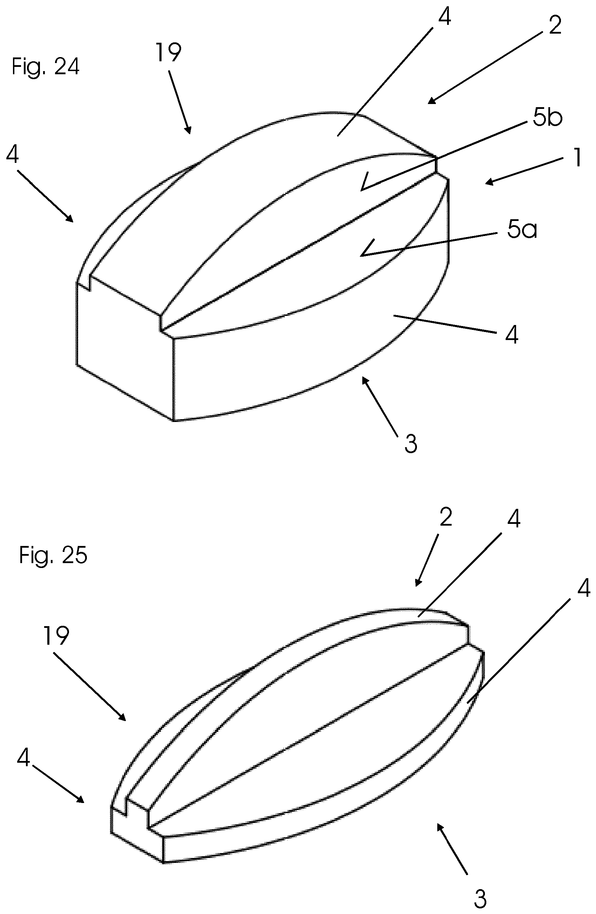

Figur 24 zeigt einen Verleimkörper 1, bei dem jeder der drei Verleimabschnitte 2, 3, 19 anstatt zwei Lamellen 4, jeweils eine breite Lamelle 4 aufweist. Die Breite der jeweiligen Lamellen ist dabei jeweils auf den Abstand der jeweiligen Oberflächen 11c der Teilausnehmung 11a, 11b der jeweiligen Leichtbauplatte 7 abgestimmt.

Figur 25 zeigt ebenfalls einen Verleimkörper 1 zum Herstellen einer T-förmigen Gehrungsverbindung, wobei jeder der drei Verleimabschnitte 2, 3, 19 jeweils eine plattenförmige Lamelle 4 aufweist, die zum Verbinden von Werkstoffkörpern 6 bzw. Leichtbauplatten 7 ausgebildet ist, die zumindest im Bereich der Gehrung ein Vollmaterial umfassen.

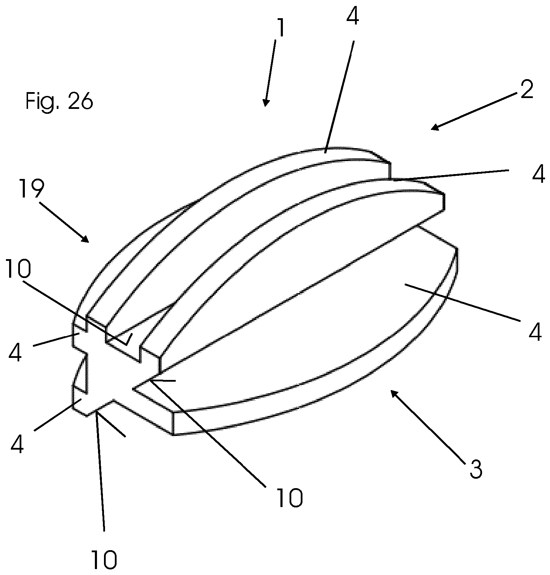

Figur 26 zeigt einen Verleimkörper 1 zum Herstellen einer T-förmigen Gehrungsverbindung, der in Anlehnung an den Verleimkörper 1 aus Figur 20 ausgebildet ist. Der hier dargestellte Verleimkörper 1 weißt jedoch an der dem zweiten Verleimabschnitt 3 gegenüberliegenden Seite des Verleimkörpers 1 einen dritten Verleimabschnitt 19 auf, der zum Verleimen mit einer Leichtbauplatte 7 ausgebildet ist und entsprechend dem ersten Verleimabschnitt 2 Lamellen 4 aufweist.

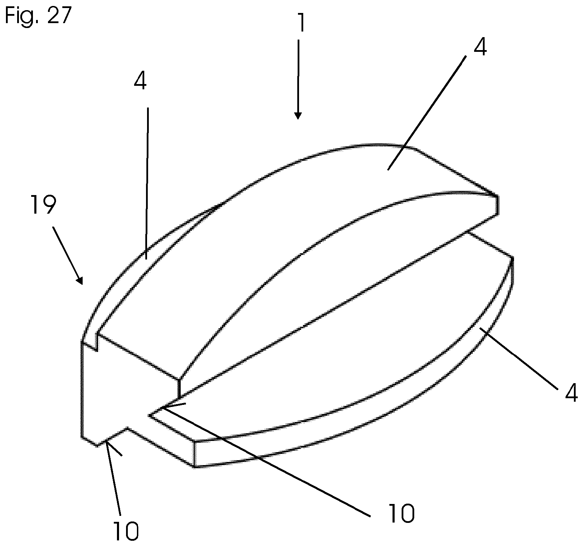

Figur 27 entspricht weitestgehend dem Verleimkörper 1 aus Figur 26 , jedoch sind im ersten Verleimabschnitt 2 und dritten Verleimabschnitt 19 anstatt der jeweils zwei Lamellen 4 jeweils eine breite Lamelle 4 angeordnet, deren Breite auf den Abstand der jeweiligen Oberflächen 11c der Teilausnehmung 11a, 11b der jeweiligen Leichtbauplatte 7 abgestimmt ist.

Die in den Figuren 24-32 dargestellten Verleimkörper 1 entsprechen weitestgehend den in den Figuren 23-27 dargestellten Verleimkörpern 1, weisen jedoch an der dem ersten Verleimabschnitt 2 gegenüberliegenden Seite einen vierten Verleimabschnitt 20 auf. Die in den Figuren 24-32 dargestellten Verleimkörper 1 sind somit zum Herstellen von kreuzförmigen Werkstoffkörperverbindungen, insbesondere kreuzförmigen Gehrungsverbindungen ausgebildet.

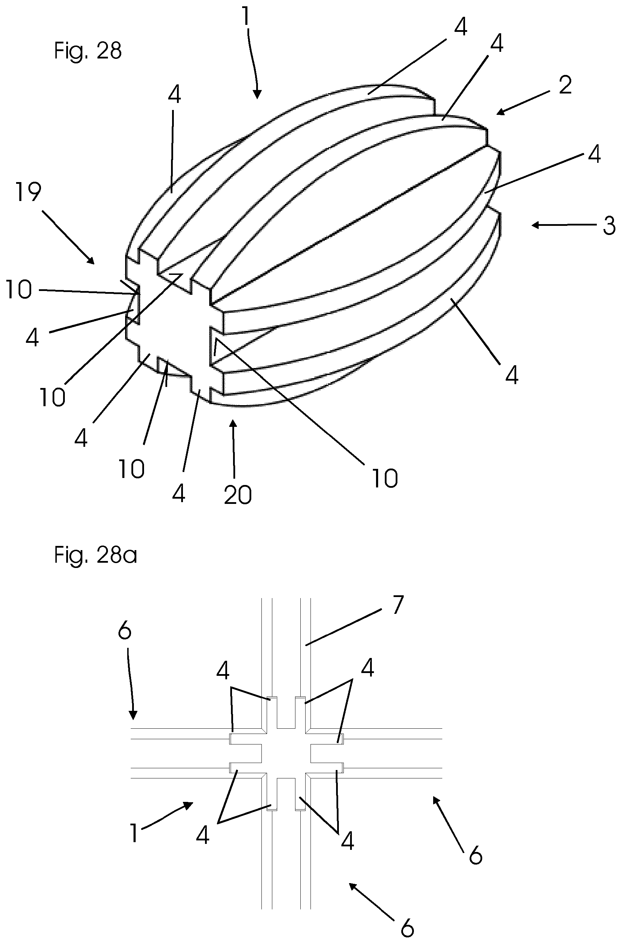

Der in Figur 28 dargestellte Verleimkörper 1 ist identisch zum Verleimkörper 1 aus Figur 23 und weist ergänzend im Bereich des vierten Verleimabschnitts 20 zwei Lamellen 4 auf, die zum Verleimen mit einer Leichtbauplatte 7 ausgebildet sind.

Figur 28a zeigt die mittels des Verleimkörpers 1 aus Figur 28 hergestellte Werkstoffkörperverbindung aus vier Leichtbauplatten 7. Die beiden jeweiligen Lamellen 4 jedes Verleimabschnitts 2, 3, 19, 20 ragen in die jeweilige Leichtbauplatte 7 hinein und sind im Bereich der erstellten Teilausnehmung in 11a, 11b mit deren Oberflächen 11 C verleimt.

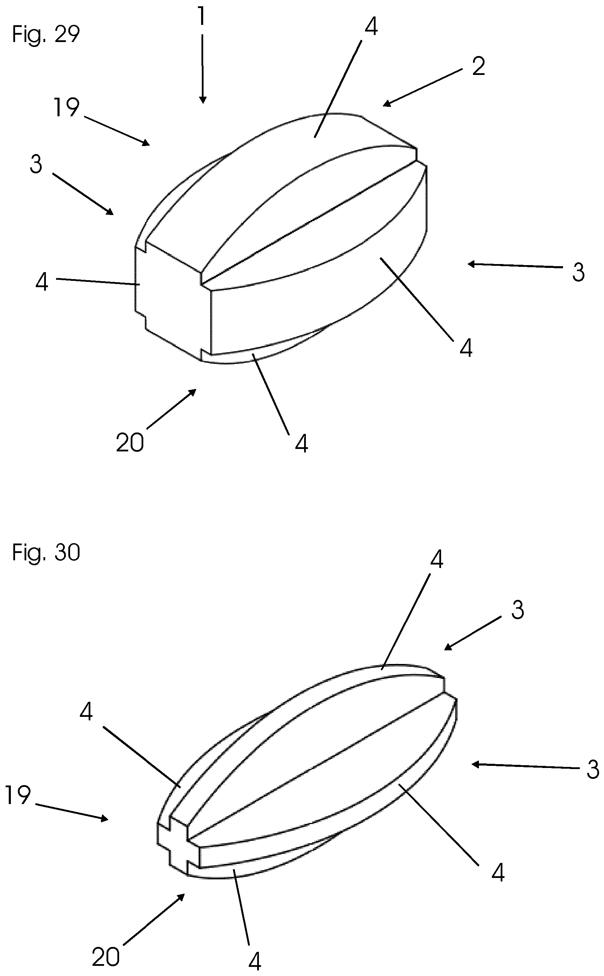

Der in Figur 29 dargestellte Verleimkörper 1 ist zum Verbinden von vier Leichtbauplatten 7 ausgebildet, die jeweils eine zwischen zwei Deckschichten angeordnete Mittelschicht 7b aufweisen. Anstatt der Lamellen 4 des Verleimkörpers 1 aus Figur 28 weist jeder Verleimabschnitt 2, 3, 19, 20 jeweils nur eine Lamelle 4 auf, die in ihrer Breite auf den Abstand der jeweiligen Oberflächen 11c der Teilausnehmung 11a, 11b der jeweiligen Leichtbauplatte 7 abgestimmt ist.

Der in Figur 30 dargestellte Verleimkörper 1 entspricht dem Verleimkörper 1 aus Figur 25 , weist jedoch im Bereich des vierten Verleimabschnitts 20 ebenfalls eine einzelne Lamelle 4 auf, die zum Eingreifen in ein Vollmaterial ausgebildet ist.

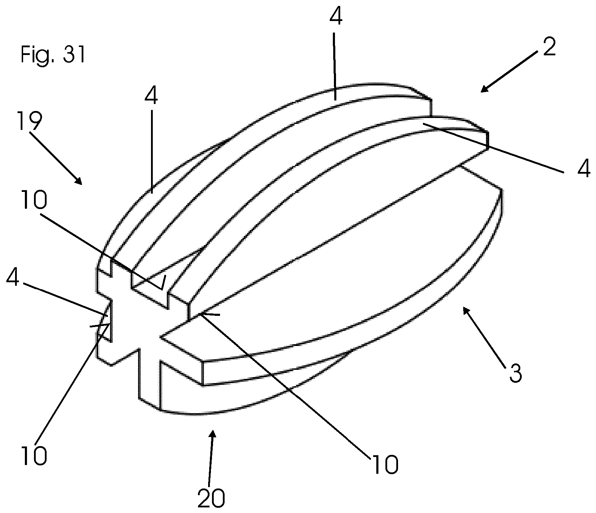

Der in Figur 31 dargestellte Verleimkörper 1 ist eine Mischung aus dem Verleimkörper 1 aus Figur 28 und dem Verleimkörper 1 aus Figur 30 . Im Bereich des ersten und dritten Verleimabschnittes 2, 19 weißt der Verleimkörper 1 jeweils zwei Lamellen 4 auf und ist somit zum Verleimen mit jeweils einer Leichtbauplatte 7 ausgebildet. Im Bereich des zweiten und vierten Verleimabschnitts 3, 20 ist jeweils eine einzelne Lamelle 4 angeordnet, die zum Eingriff in ein Vollmaterial 21 eines Werkstoffkörpers 6 ausgebildet ist. Alle Lamellen 4 weisen eine halbmandelförmige Form auf.

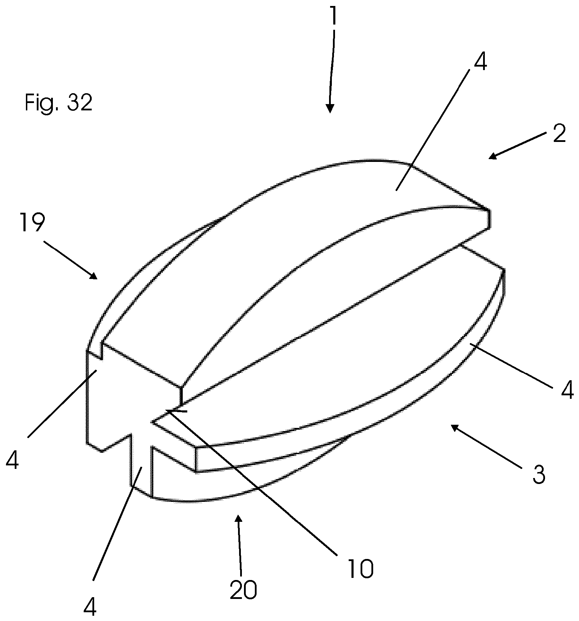

Figur 32 zeigt einen Verleimkörper 1 der entsprechend dem Verleimkörper 1 aus Figur 31 zum Verbinden von zwei Leichtbauplatten 7 und zwei Werkstoffkörpern 6, die im Bereich der Gehrung ein Vollmaterial 21 aufweisen, ausgebildet ist. Bei diesen Verleimkörpern 1 sind im Bereich des ersten Verleimabschnitts 2 und des dritten Verleimabschnitts 19 jedoch nicht wie beim Verleimkörper 1 aus Figur 31 zwei parallele Lamellen 4 angeordnet, sondern eine durchgängige Lamelle 4, deren Breite auf den Abstand der jeweiligen Oberflächen 11c der Teilausnehmung 11a, 11b der jeweiligen Leichtbauplatte 7 abgestimmt ist.

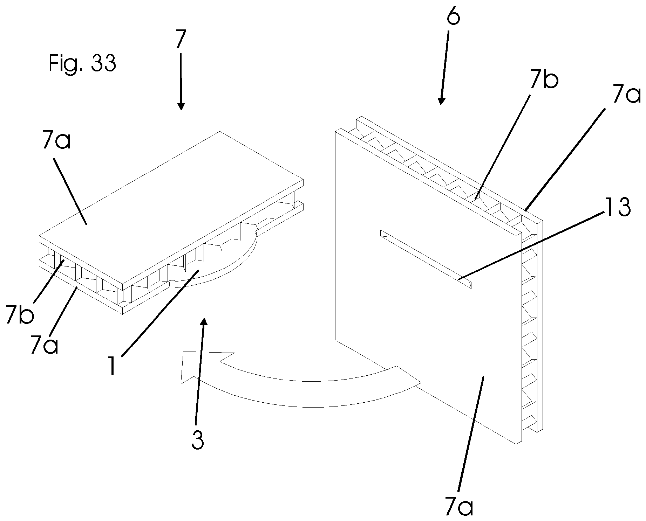

Die Figuren 33 bis 40 zeigen einen Verleimkörper 1, der einstückig mit einer Deckschicht 7 oder einer Mittelschicht 7b ausgebildet ist und einen zweiten Verleimabschnitt 3 zum Verleimen mit einem Werkstoffkörper 6 aufweist.

Figur 33 zeigt in einer perspektivischen Darstellung eine Leichtbauplatte 7 mit zwei Deckschichten 7a und einer Mittellage 7b. An der unteren Deckschicht 7a ist einstückig mit der Deckschicht 7a ein Verleimkörper 1 ausgebildet. Der Verleimkörper 1 ist somit integraler Bestandteil der Deckschicht 7a. Er wurde beim Herstellen der Seitenkante 7c der Leichtbauplatte 7 an die untere Deckschicht 7a angeformt, beispielsweise gefräst. Weiter zeigt Figur 33 einen Werkstoffkörper 6, der ebenfalls als Leichtbauplatte 7 mit zwei Deckschichten 7a und einer Mittellage 7b ausgebildet ist. In der Deckschicht 7a ist eine Ausnehmung 13 angeordnet, die schlitzförmig ausgebildet und zum Einstecken des Verleimkörpers 1 mit seinem zweiten Verleimabschnitt 3 vorgesehen ist. Der Verleimkörper 1 ist halbmandelförmig ausgebildet.

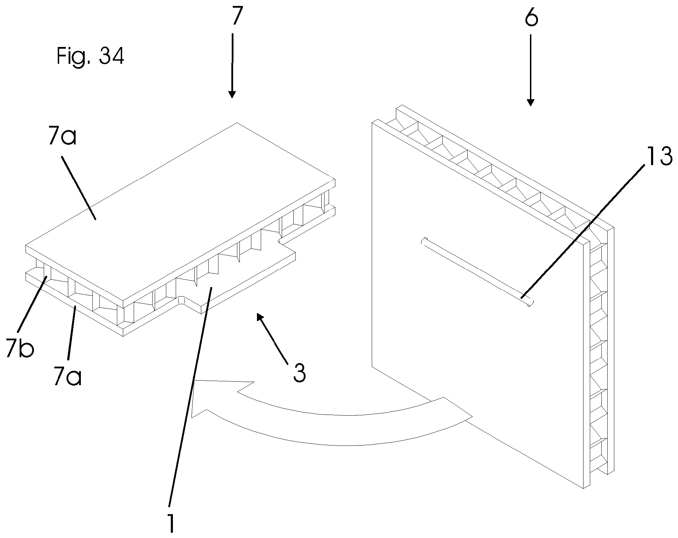

Figur 34 zeigt eine zu der in Figur 33 dargestellten Ausführungsform weitestgehend identische Ausführungsform, bei der jedoch der Verleimkörper 1 eine rechtwinklige Form aufweist, sodass auch die Ausnehmung Ziffer 13 im Werkstoffkörper 6 entsprechend angepasst ist.

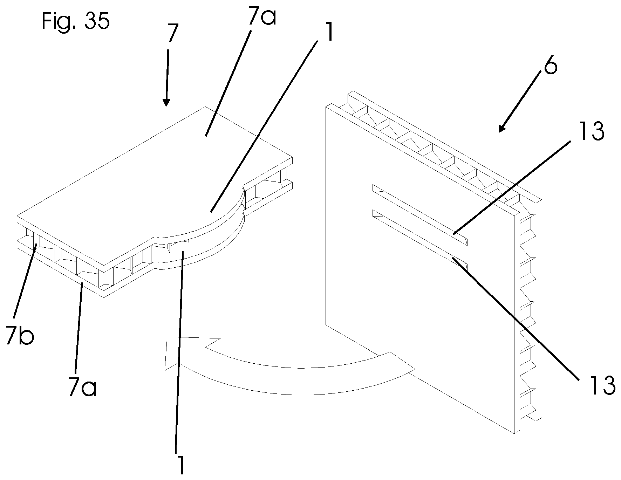

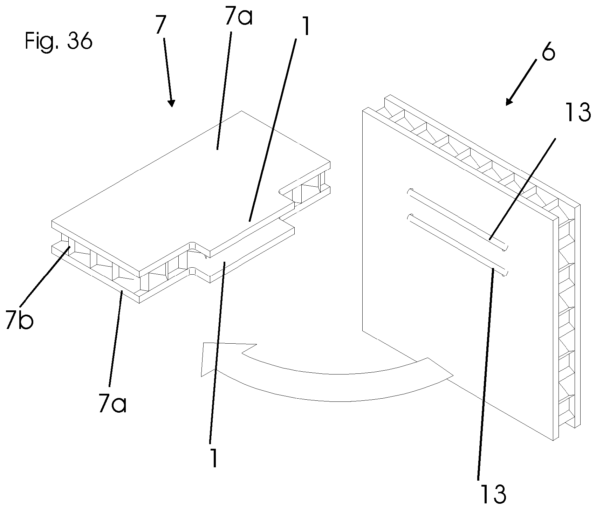

Figuren 35 und 36 zeigen jeweils eine Ausführungsform, bei der jeweils neben dem einen Verleimkörper an der unteren Deckschicht 7a der Leichtbauplatte 7 jeweils auch an der oberen Deckschicht 7a der Leichtbauplatte 7 ein Verleimkörper 1 angeordnet ist. Dementsprechend weisen auch die Werkstoffkörper 6, die ebenfalls als dreilagige Leichtbauplatte 7 ausgebildet sind, jeweils zwei Ausnehmungen 13 auf, die schlitzförmig und an die jeweiligen Verleimkörper 1 angepasst ausgebildet sind. Die Ausführungsform aus Figur 35 weist halbmandelförmige Verleimkörper 1 auf, während die Verleimkörper 1 in Figur 36 rechtwinklig dargestellt sind.

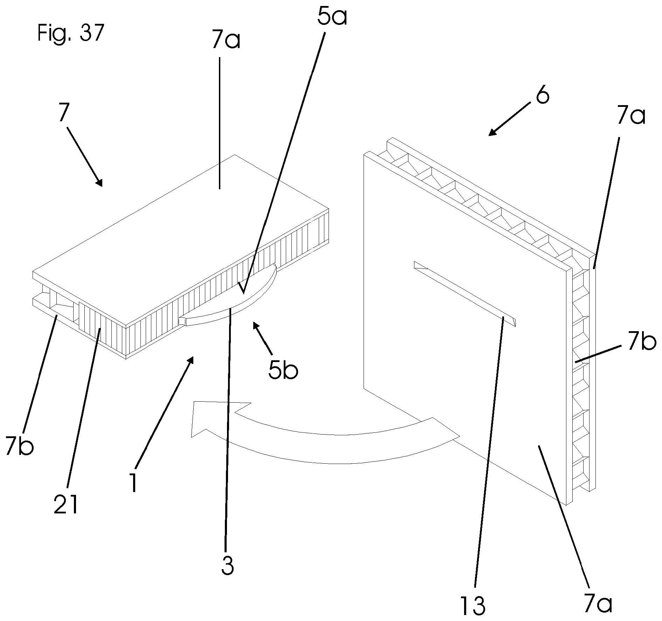

Figur 37 bis Figur 40 zeigen jeweils integral mit der Mittelschicht 7b ausgebildete Verleimkörper 1. Dabei ist jeweils im Bereich der Seitenkante 7c der Leichtbauplatte 7 ein Vollmaterial 21 angeordnet, aus dem der bzw. die jeweiligen Verleimkörper 1 ausgeformt wurden.

In Figur 37 wurde ein halbmandelförmiger Verleimkörper 1 angeformt. Dementsprechend ist in dem ebenfalls als Leichtbauplatte 7 ausgebildeten Werkstoffkörper 6 eine entsprechende Ausnehmung 13 angeordnet.

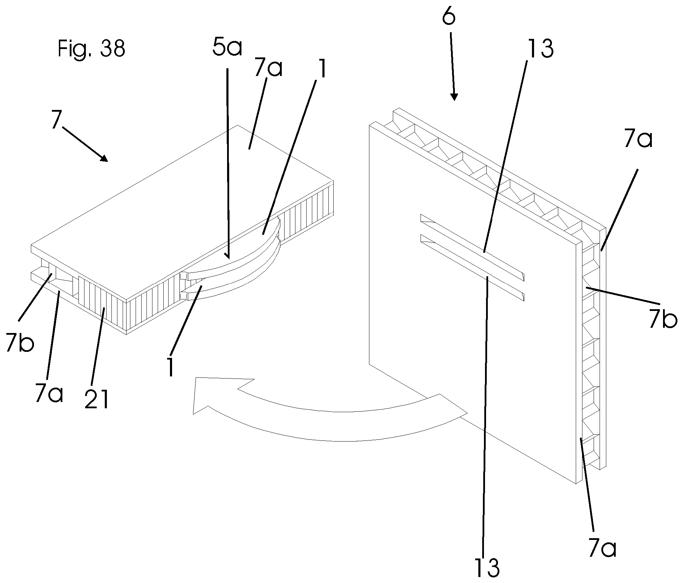

Figur 38 zeigt zwei parallel zueinander angeordnete halbmandelförmige Verleimkörper 1 an der Mittellage 7b. Dementsprechend sind auch zwei parallele schlitzförmige Ausnehmungen 13 im Werkstoffkörper 6 angeordnet.

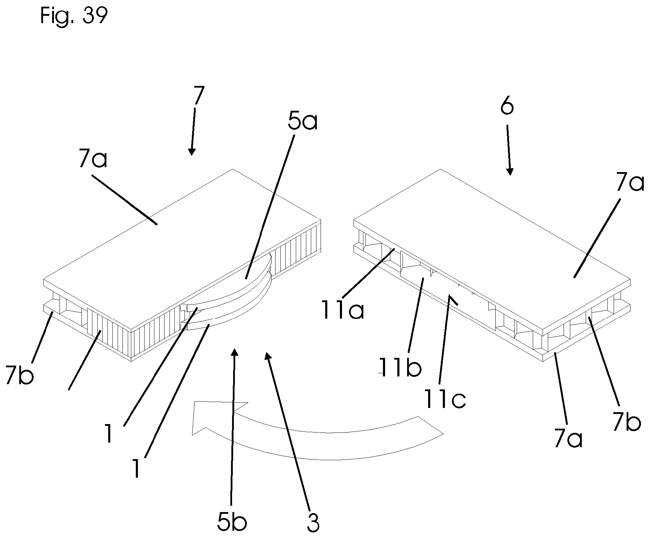

Figur 39 zeigt entsprechend Figur 38 zwei als parallel angeordnete Verleimkörper, die halbmandelförmig ausgebildet und an der Mittelschicht angeformt wurden. Der Werkstoffkörper 6 wird jedoch mit der Seitenkante 6a an die Seitenkanten 7c der Leichtbauplatte 7 angesetzt, sodass keine Eckverbindung, sondern eine flächenbündige Verbindung zwischen der Leichtbauplatte 7 und dem Werkstoffkörper 6 entsteht.

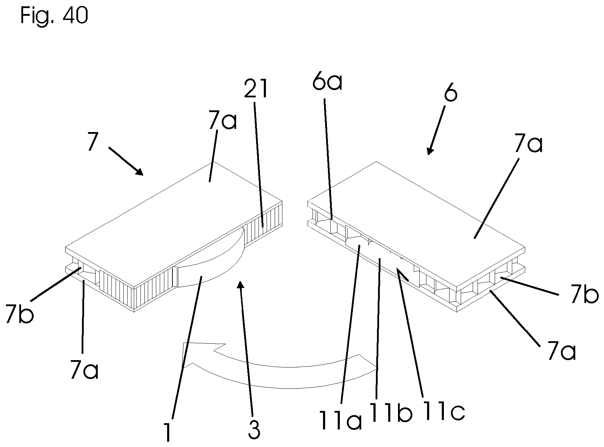

Eine identische Werkstoffverbindung zeigt Figur 40 , wobei hier jedoch anstatt zwei als Lamellen 4 ausgebildeten Verleimkörpern 1 ein breiter Verleimkörper 1 angeordnet ist. Der Werkstoffkörper 6 in Figur 39 und 40 weist jeweils Teilausnehmungen 11a, 11b auf, deren Oberflächen 11c mit den jeweiligen Verleimoberflächen 5a, 5a des Verleimkörpers 1 verklebt werden.

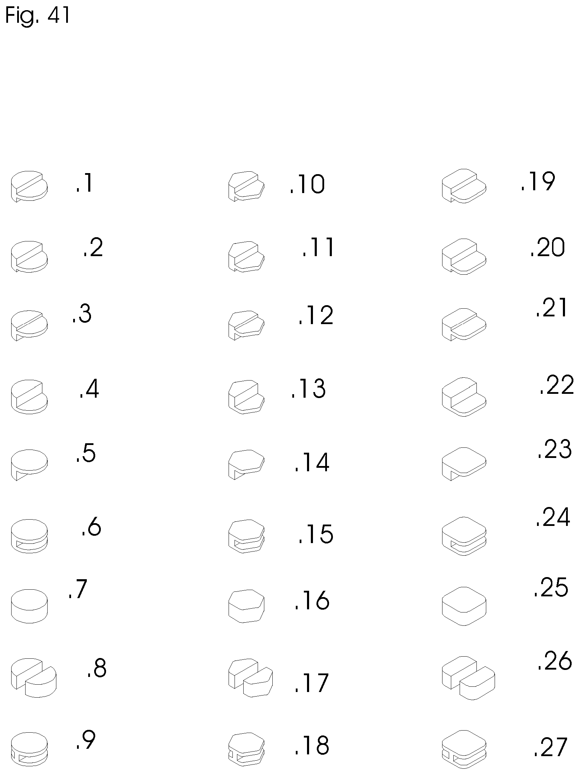

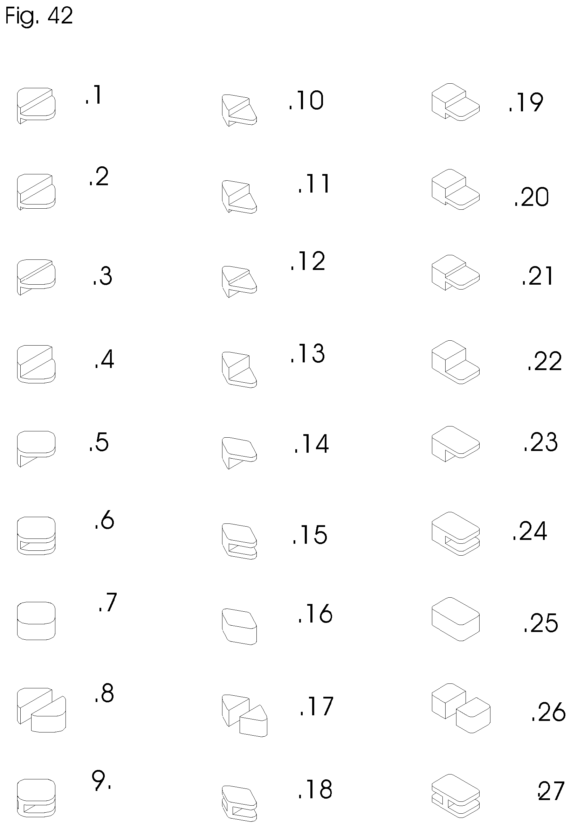

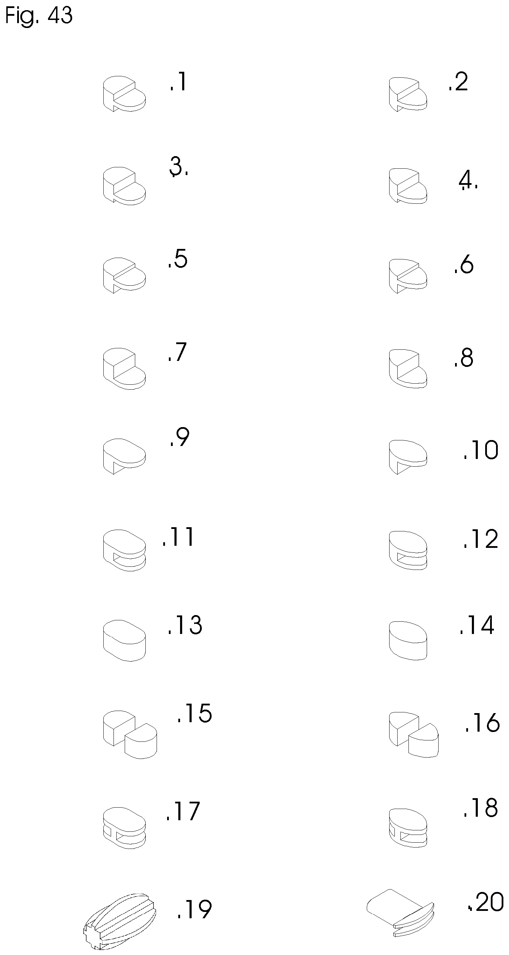

Die Figuren 41.1 bis Figur 43.20 zeigen in einer Übersicht in perspektivischer Darstellung weitere mögliche Ausführungsformen des Verleimkörpers 1. Alle dargestellten Verleimkörper 1 weisen dabei zumindest einen ersten Verleimabschnitt zum Verleimen mit zwei Deckseiten einer Leichtbauplatte auf.

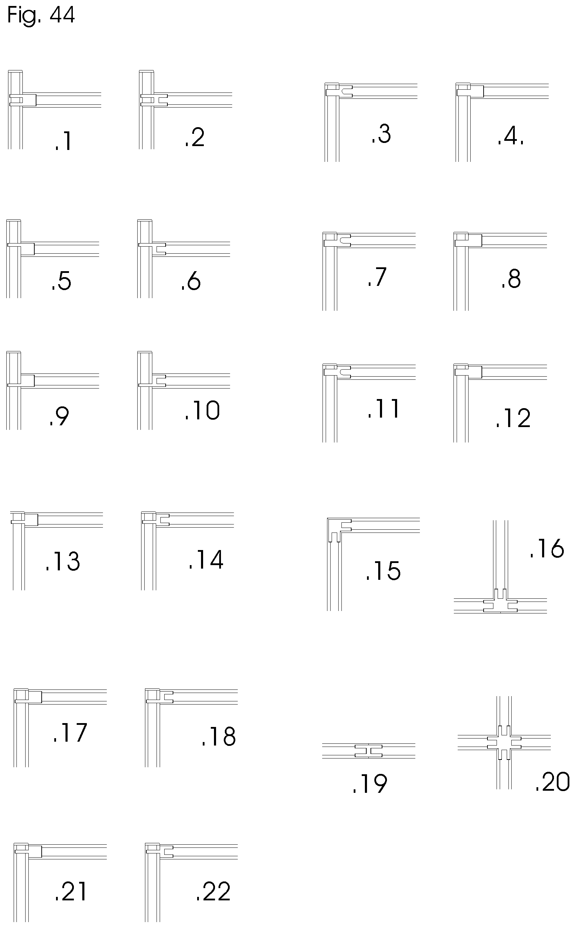

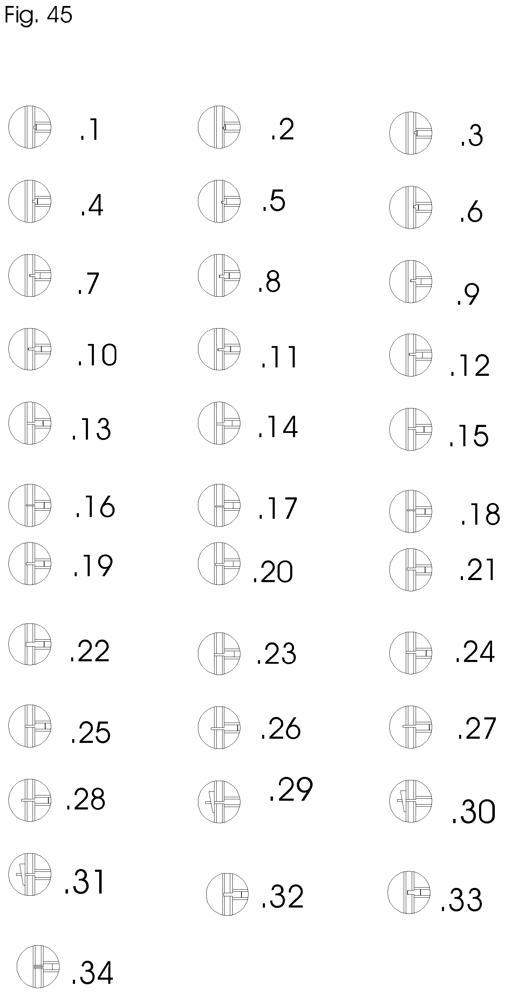

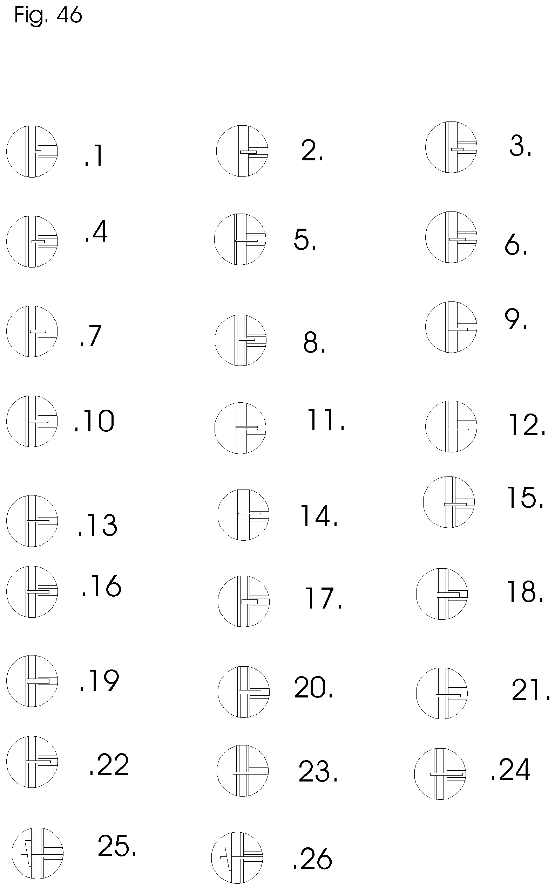

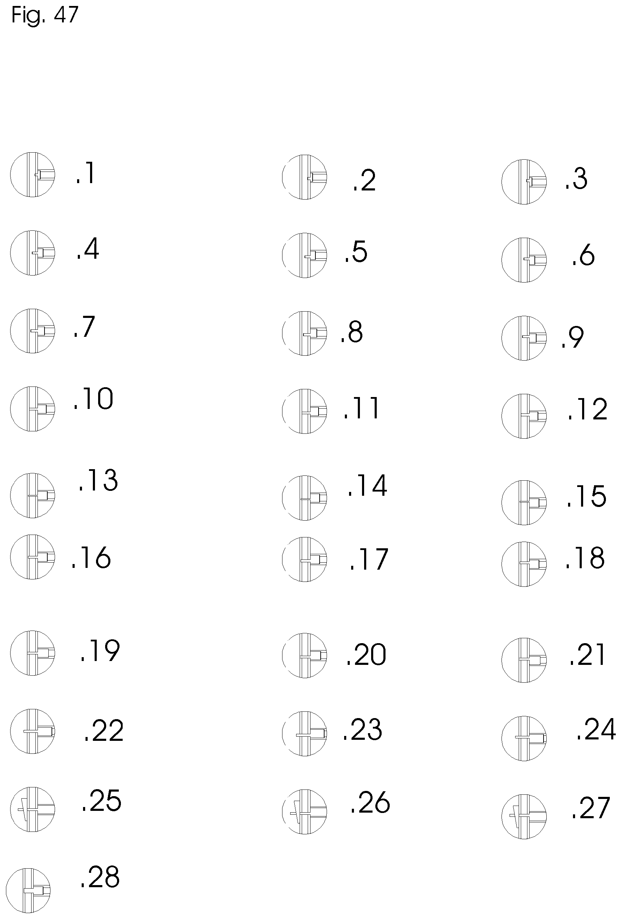

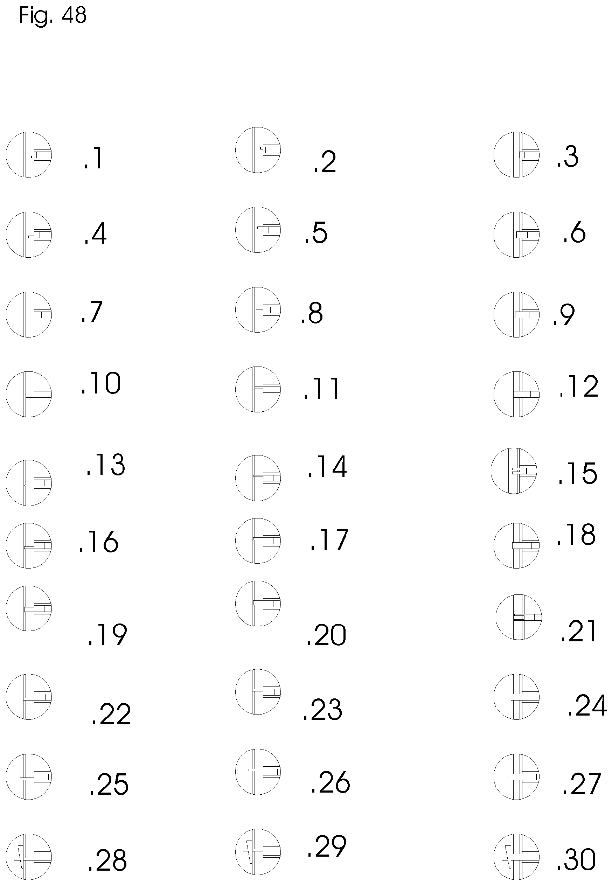

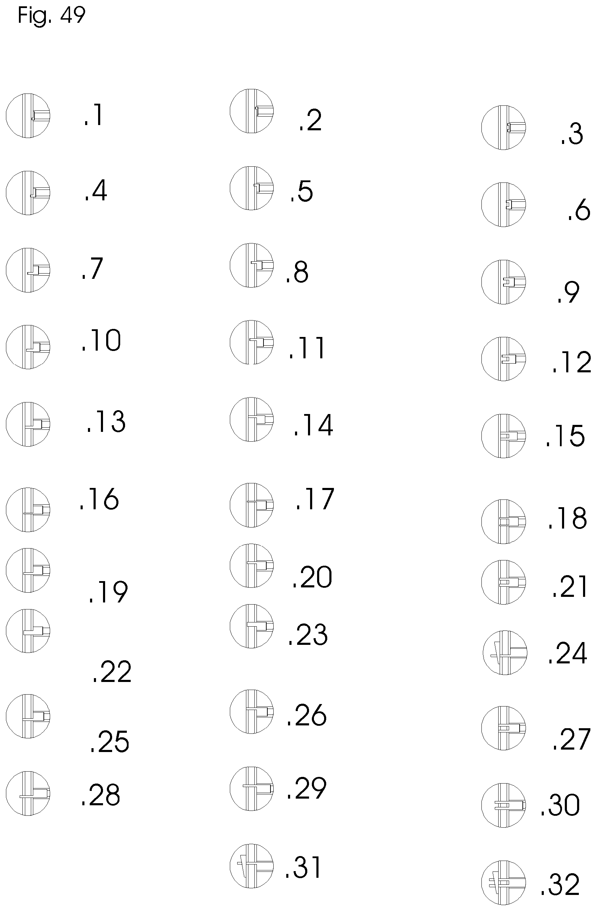

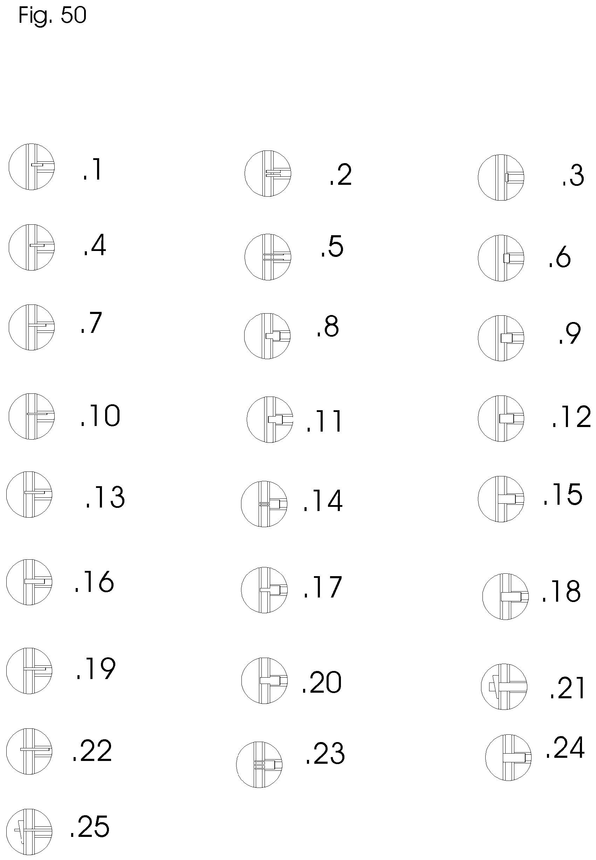

Die Figuren 44.1 bis 50.25 zeigen in einer Übersicht im (vertikalen) Querschnitt dargestellte weitere mögliche Ausführungsformen der Werkstoffkörperverbindung. Sämtliche dargestellten Werkstoffkörperverbindungen zeigen eine Leichtbauplatte (7) und einen ebenfalls als Leichtbauplatte ausgebildeten Werkstoffkörper (6).

Alle in den Figuren dargestellten Verleimkörper 1 können aus einem Fasermaterial, bspw. einem Hartfasermaterial, einem Spanmaterial, OSB-Material, aus Massivholz, Kunststoff oder einem WPC-Material ausgebildet sein. Selbstverständlich kann der Verleimkörper (1) auch aus Kombinationen der vorgenannten Materialien bestehen.

Zudem ist jeder der in den Figuren gezeigten Verleimkörper (1) einstückig ausgebildet, d. h., seine einzelnen Abschnitte sind nicht zerstörungsfrei trennbar. Somit wurde der Verleimkörper entweder als Ganzes aus einem Material hergestellt oder es wurden verschiedene Bauteile so miteinander verbunden, dass diese nicht zerstörungsfrei voneinander lösbar sind.

### Bezugszeichenliste

- 1
- Verleimkörper
- 2
- erster Verleimabschnitt
- 3
- zweiter Verleimabschnitt
- 4
- Lamellen
- 4a
- gerade Längskante
- 5a, 5b
- Verleimoberflächen
- 6
- Werkstoffkörper
- 6a
- Kante Werkstoffkörper
- 7
- Leichtbauplatte
- 7a
- Deckschicht/Decklage
- 7b
- Mittelschicht/Mittellage
- 7c
- Seitenkante
- 7d
- Oberfläche Deckschicht
- 8
- zweiter Werkstoffkörper
- 9
- Stufe
- 10
- Stufenfläche
- 11
- Ausnehmung
- 11a, 11b
- Teilausnehmung
- 11c
- Oberflächen Teilausnehmungen
- 12
- Oberfläche Innenseite Deckschicht
- 13
- Ausnehmung
- 14
- Leim
- 15
- Rundkörper
- 16
- runde Ausnehmung
- 17
- ovaler Zapfen
- 18
- Harpunenstegprofil
- 19
- dritter Verleimabschnitt
- 20
- vierter Verleimabschnitt
- 21
- Vollmaterial

## Patentansprüche

1. Werkstoffkörperverbindung aufweisend einen Verleimkörper, eine Leichtbauplatte (7) und einen Werkstoffkörper (6), wobei die Leichtbauplatte (7) mindestens eine zwischen zwei Deckschichten (7a) angeordnete Mittelschicht (7b) aufweist, wobei die Innenseiten der zwei Deckschichten Ausnehmungen (11a, 11b) aufweisen, wobei
- der Verleimkörper (1) einstückig ausgebildet ist,
- mindestens zwei Verleimabschnitte (2, 3) aufweist, und
- ein erster Verleimabschnitt (2) zum Verleimen mit beiden Deckschichten (7a) der Leichtbauplatte (7) und ein zweiter Verleimabschnitt (3) zum Verleimen mit dem Werkstoffkörper (6) ausgebildet sind, **dadurch gekennzeichnet, dass** der Verleimkörper eine mandelförmige Form aufweist, wobei unter mandelförmig eine ovale Form verstanden wird, die durch zwei identische sich schneidende Kreisbögen gebildet ist, wobei die Schnittpunkte der Kreisbögen abgerundet sind, und wobei der erste Verleimabschnitt (2) zwei Verleimoberflächen (5a, 5b) aufweist, die parallel zueinander angeordnet sind, und zum Verleimen mit jeweils einer der Deckschichten ausgebildet sind, wobei der Abstand der Verleimoberflächen (5a, 5b) des ersten Verleimabschnitts (2) dem Abstand der Oberflächen von einander zugewandten Innenseiten der in den Deckschichten (7a) ausgebildeten Ausnehmungen entspricht.

2. Werkstoffkörperverbindung nach einem der vorhergehenden Ansprüche, **dadurch gekennzeichnet, dass** die zwei Verleimabschnitte (2,3) des Verleimkörpers (1) einen gestuften Querschnitt aufweisen.

3. Werkstoffkörperverbindung nach einem der vorhergehenden Ansprüche, **dadurch gekennzeichnet, dass** die Verleimabschnitte des Verleimkörpers (1) unterschiedliche Stärken aufweisen, wobei zwischen den Verleimabschnitten eine Stufe (9) angeordnet ist.

4. Werkstoffkörperverbindung nach einem der vorhergehenden Ansprüche, **dadurch gekennzeichnet, dass** die Stufenfläche (10) des Verleimköprers (1) in einem Winkel von 90° +/- 1 bis 2° oder 45° +/-1°bis 2° zu den Verleimoberflächen (5a, 5b) des ersten Verleimabschnittes (2) angeordnet ist.

5. Werkstoffkörperverbindung nach einem der vorhergehenden Ansprüche, **dadurch gekennzeichnet, dass** der erste Verleimabschnitt (2) des Verleimkörpers (1) zwei Lamellen (4) aufweist, wobei jede Lamelle (4) jeweils eine Verleimoberfläche (5a, 5b) zum Verleimen mit jeweils einer der Deckschichten (7a) der Leichtbauplatte (7) aufweist.

6. Werkstoffkörperverbindung nach einem der vorhergehenden Ansprüche, **dadurch gekennzeichnet, dass** der zweite Verleimabschnitt (3) des Verleimkörpers (1) plattenförmig ausgebildet ist und eine Stärke von 4 mm +/- maximal 0,3 mm oder eine Stärke von 8 mm +/- max-0,3 mm aufweist.

7. Werkstoffkörperverbindung nach einem der vorhergehenden Ansprüche, **dadurch gekennzeichnet, dass** der zweite Verleimabschnitt (3) des Verleimkörpers (1) zwei Lamellen (4) aufweist, wobei jede Lamelle (4) jeweils eine Verleimoberfläche (5a, 5b) zum Verleimen mit jeweils einer Deckschicht (7a) des Werkstoffkörpers (6) aufweist.

8. Werkstoffkörperverbindung nach einem der vorhergehenden Ansprüche, **dadurch gekennzeichnet, dass** der erste Verleimabschnitt (2) und der zweite Verleimabschnitt (3) des Verleimkörpers (1) jeweils eine Verleimfläche aufweisen, die in einem Winkel von 25° +-/ 5° bis 175° +/- 5° insbesondere in einem Winkel von 90° +/- 5° bis 10° zueinander ausgerichtet sind.

9. Werkstoffkörperverbindung nach einem der vorhergehenden Ansprüche, **dadurch gekennzeichnet, dass** der erste Verleimabschnitt (2) und der zweite Verleimabschnitt (3) des Verleimkörpers (1) jeweils eine Verleimfläche aufweisen, wobei die Verleimflächen in einem Winkel von 180° zueinander ausgerichtet sind.

10. Werkstoffkörperverbindung nach einem der Ansprüche 1 bis 9**,** wobei der zweite Verleimabschnitt (3) in einer Ausnehmung (13) des Werkstoffkörpers (6) angeordnet und befestigt ist.

11. Werkstoffkörperverbindung nach Anspruch 10, **dadurch gekennzeichnet, dass** die Werkstoffkörperverbindung eine Winkelverbindung ≠ 180° ist, und der zweite Verleimabschnitt (3) durch eine Deckschicht (7a) und eine Mittellage (7b) eines als Leichtbauplatte (7) ausgebildeten Werkstoffkörpers (6) bis an oder in eine zweite Deckschicht (7a) des Werkstoffkörpers (6a) ragt und insbesondere mit den beiden Deckschichten (7a) verleimt ist.

12. Werkstoffkörperverbindung nach mindestens einem der Ansprüche 10 oder 11, **dadurch gekennzeichnet, dass** zwischen dem Werkstoffkörper (6) und der Leichtbauplatte (7) ausschließlich eine Klebeverbindung (14) vorliegt, wobei ins besondere zwischen dem ersten Verleimabschnitt (2) und der Leichtbauplatte (7) und/oder zwischen dem zweiten Verleimabschnitt (3) und dem Werkstoffkörper (6) eine Klebeverbindung (14) ausgebildet ist.

13. Verfahren zur Herstellung einer Werkstoffkörperverbindung nach einem der Ansprüche 1 bis 12, wobei die Leichtbauplatte (7) mindestens eine zwischen zwei Deckschichten (7a) angeordnete Mittellage (7b) aufweist, mit folgenden Schritten:
- Erstellen einer auf die Form eines ersten Verleimabschnitts (2) eines mandelförmigen Verleimkörpers (1) angepassten halbmandelförmigen ersten Ausnehmung (11) in der Mittellage (7b) der Leichtbauplatte (7), wobei unter halbmandelförmig eine entlang einer Längsachse geteilte Mandelform verstanden wird, wobei die Mandelform eine ovale Form ist, die durch zwei identische sich schneidende Kreisbögen gebildet ist, wobei die Schnittpunkte der Kreisbögen abgerundet sind, und wobei die Ausnehmung (11) an beide Deckschichten (7a) direkt angrenzt oder in zumindest eine der Deckschichten (7a) teilweise eingreift,
- Erstellen einer auf die Form eines zweiten Verleimabschnitts (3) des Verleimkörpers (1) angepassten halbmandelfömigen Ausnehmung (13) in dem Werkstoffkörper (6),
- Einführen eines ersten Verleimabschnitts (2) des Verleimkörpers (1) in die erste Ausnehmung (11) und Verleimen des Verleimkörpers mit beiden Deckschichten,
- Einführen eines zweiten Verleimabschnitts (3) des Verleimkörpers (1) in die zweite Ausnehmung (13) und Verleimen des zweiten Verleimabschnitts (3) mit dem Werkstoffkörper (6).

14. Verfahren nach Anspruch 13 **dadurch gekennzeichnet, dass** eine Stufenfläche 25 (10) des Verleimkörpers (1) mit einer Seitenkante (7d) oder einer Oberfläche des Leichtbauwerkstoffs (7) bündig angeordnet wird.

## Claims

1. Material body connection comprising a gluing body, a lightweight board (7), and a material body (6), wherein the lightweight board (7) comprises at least one core layer (7b) arranged between two cover layers (7a), wherein the inner sides of the two cover layers comprise recesses (11a, 11b), wherein
the gluing body (1) is formed in one piece,
comprises at least two gluing portions (2, 3), and
a first gluing portion (2) for gluing to both cover layers (7a) of the lightweight board (7) and a second gluing portion (3) for gluing to the material body (6) are formed,
**characterized in that**
the gluing body has an almond-shaped form, wherein almond-shaped is understood to mean an oval shape formed by two identical intersecting circular arcs, wherein the points of intersection of the circular arcs are rounded, and wherein the first gluing portion (2) comprises two gluing surfaces (5a, 5b) that are arranged parallel to one another and are configured for gluing to one of the cover layers, respectively,
wherein the distance between the gluing surfaces (5a, 5b) of the first gluing portion (2) corresponds to the distance between the surfaces of facing inner sides of the recesses formed in the cover layers (7a).

2. Material body connection according to claim 1, **characterized in that** the two gluing portions (2, 3) of the gluing body (1) have a stepped cross-section.

3. Material body connection according to any one of the preceding claims, **characterized in that** the gluing portions of the gluing body (1) have different thicknesses, wherein a step (9) is arranged between the gluing portions.

4. Material body connection according to any one of the preceding claims, **characterized in that** the step surface (10) of the gluing body (1) is arranged at an angle of 90° ± 1° to 2° or 45° ± 1° to 2°^{°} relative to the gluing surfaces (5a, 5b) of the first gluing portion (2).

5. Material body connection according to any of the preceding claims, **characterized in that** the first gluing portion (2) of the gluing body (1) comprises two lamellae (4), wherein each lamella (4) comprises a respective gluing surface (5a, 5b) for gluing to a respective one of the cover layers (7a) of the lightweight board (7).

6. Material body connection according to any one of the preceding claims, **characterized in that** the second gluing portion (3) of the gluing body (1) is formed plate-shaped and has a thickness of 4 mm ± maximal 0.3 mm or a thickness of 8 mm ± maximal 0.3 mm.

7. Material body connection according to any one of the preceding claims, **characterized in that** the second gluing portion (3) of the gluing body (1) comprises two lamellae (4), wherein each lamella (4) comprises a gluing surface (5a, 5b) for gluing to a respective cover layer (7a) of the material body (6).

8. Material body connection according to any one of the preceding claims, **characterized in that** the first gluing portion (2) and the second gluing portion (3) of the gluing body (1) each comprise a gluing surface that are oriented relative to one another at an angle of 25° ± 5° to 175° ± 5°, in particular at an angle of 90° ± 5° to 10°.

9. Material body connection according to any one of the preceding claims, **characterized in that** the first gluing portion (2) and the second gluing portion (3) of the gluing body (1) each comprise a gluing surface, wherein the gluing surfaces are aligned at an angle of 180° to one another.

10. Material body connection according to any one of claims 1 to 9, wherein the second gluing portion (3) is arranged and secured in a recess (13) of the material body (6).

11. Material body connection according to claim 10, **characterized in that** the material body connection is an angled connection of ≠ 180°, and the second gluing portion (3) extends through a cover layer (7a) and a core layer (7b) of a material body (6) formed as a lightweight board (7) up to or into a second cover layer (7a) of the material body (6a) and is glued in particular to the two cover layers (7a).

12. Material body connection according to at least one of claims 10 or 11, **characterized in that** there is exclusively an adhesive bond (14) between the material body (6) and the lightweight board (7), wherein, in particular, an adhesive bond (14) is formed between the first gluing portion (2) and the lightweight board (7) and/or between the second gluing portion (3) and the material body (6).

13. Method for manufacturing a material body connection according to any one of claims 1 to 12, wherein the lightweight board (7) comprises at least one core layer (7b) arranged between two cover layers (7a), comprising the following steps:
creating a semi-almond-shaped first recess (11) in the core layer (7b) of the lightweight board (7) that is adapted to the shape of a first gluing portion (2) of an almond-shaped gluing body (1), wherein semi-almond-shaped is understood to mean an almond shape divided along a longitudinal axis, wherein the almond shape is an oval shape formed by two identical intersecting circular arcs, wherein the points of intersection of the circular arcs are rounded, and wherein the recess (11) directly adjoins both cover layers (7a) or partially engages into at least one of the cover layers (7a);
creating a semi-almond-shaped recess (13) in the material body (6) adapted to the shape of a second gluing portion (3) of the gluing body (1),
inserting a first gluing portion (2) of the gluing body (1) into the first recess (11) and gluing the gluing body to both cover layers; and
inserting a second gluing portion (3) of the gluing body (1) into the second recess (13) and gluing the second gluing portion (3) to the material body (6).

14. Method according to claim 13, **characterized in that** a step surface (10) of the gluing body (1) is arranged flush with a side edge (7d) or a surface of the lightweight board (7).

## Revendications

1. Liaison de corps de matériau présentant un corps d'encollage, une plaque légère (7) et un corps de matériau (6), la plaque légère (7) présentant au moins une couche intermédiaire (7b) disposée entre deux couches de couverture (7a), les côtés intérieurs des deux couches de couverture présentant des évidements (11a, 11b),
- le corps d'encollage (1) étant réalisé d'une seule pièce,
- présentant au moins deux sections d'encollage (2, 3), et
- une première section d'encollage (2) destinée à être encollée avec les deux couches de couverture (7a) de la plaque légère (7) et une deuxième section d'encollage (3) destinée à être encollée avec le corps de matériau (6) étant réalisées, **caractérisée en ce que**
le corps d'encollage présente une forme d'amande, étant entendu par forme d'amande une forme ovale formée par deux arcs de cercle identiques se croisant, les points d'intersection des arcs de cercle étant arrondis, et la première section d'encollage (2) présentant deux surfaces d'encollage (5a, 5b) qui sont disposées parallèlement l'une à l'autre et sont réalisées pour être encollées avec respectivement l'une des couches de couverture,
la distance des surfaces d'encollage (5a, 5b) de la première section d'encollage (2) correspondant à la distance des surfaces de côtés intérieurs opposés l'un à l'autre des évidements réalisés dans les couches de couverture (7a).

2. Liaison de corps de matériau selon l'une des revendications précédentes, **caractérisée en ce que** les deux sections d'encollage (2, 3) du corps d'encollage (1) présentent une section transversale étagée.

3. Liaison de corps de matériau selon l'une des revendications précédentes, **caractérisée en ce que** les sections d'encollage du corps d'encollage (1) présentent des épaisseurs différentes, une marche (9) étant disposée entre les sections d'encollage.

4. Liaison de corps de matériau selon l'une des revendications précédentes, **caractérisée en ce que** la surface de marche (10) du corps d'encollage (1) est disposée à un angle de 90° +/- 1 à 2° ou de 45° +/- 1° à 2° par rapport aux surfaces d'encollage (5a, 5b) de la première section d'encollage (2).

5. Liaison de corps de matériau selon l'une des revendications précédentes, **caractérisée en ce que** la première section d'encollage (2) du corps d'encollage (1) présente deux lamelles (4), chaque lamelle (4) présentant respectivement une surface d'encollage (5a, 5b) destinée à être encollée avec respectivement une des couches de couverture (7a) de la plaque légère (7).

6. Liaison de corps de matériau selon l'une des revendications précédentes, **caractérisée en ce que** la deuxième section d'encollage (3) du corps d'encollage (1) est réalisée en forme de plaque et présente une épaisseur de 4 mm +/- maximum 0,3 mm ou une épaisseur de 8 mm +/max. 0,3 mm.

7. Liaison de corps de matériau selon l'une des revendications précédentes, **caractérisée en ce que** la deuxième section d'encollage (3) du corps d'encollage (1) présente deux lamelles (4), chaque lamelle (4) présentant respectivement une surface d'encollage (5a, 5b) destinée à être encollée avec respectivement une couche de couverture (7a) du corps de matériau (6).

8. Liaison de corps de matériau selon l'une des revendications précédentes, **caractérisée en ce que** la première section d'encollage (2) et la deuxième section d'encollage (3) du corps d'encollage (1) présentent respectivement une surface d'encollage qui sont orientées l'une par rapport à l'autre à un angle de 25° +/- 5° à 175° +/- 5°, en particulier à un angle de 90° +/- 5° à 10°.

9. Liaison de corps de matériau selon l'une des revendications précédentes, **caractérisée en ce que** la première section d'encollage (2) et la deuxième section d'encollage (3) du corps d'encollage (1) présentent chacune une surface d'encollage, les surfaces d'encollage étant orientées l'une par rapport à l'autre à un angle de 180°.

10. Liaison de corps de matériau selon l'une des revendications 1 à 9, la deuxième section d'encollage (3) étant disposée et fixée dans un évidement (13) du corps de matériau (6).

11. Liaison de corps de matériau selon la revendication 10, **caractérisée en ce que** la liaison de corps de matériau est une liaison angulaire ≠ 180°, et la deuxième section d'encollage (3) s'étend à travers une couche de couverture (7a) et une couche intermédiaire (7b) d'un corps de matériau (6) réalisé sous forme de plaque légère (7) jusqu'à une deuxième couche de couverture (7a) du corps de matériau (6a) ou dans celle-ci et est notamment encollée avec les deux couches de couverture (7a).

12. Liaison de corps de matériau selon au moins l'une des revendications 10 ou 11, **caractérisée en ce qu'**il existe exclusivement une liaison adhésive (14) entre le corps de matériau (6) et la plaque légère (7), en particulier une liaison adhésive (14) est réalisée entre la première section d'encollage (2) et la plaque légère (7) et/ou entre la deuxième section d'encollage (3) et le corps de matériau (6).

13. Procédé de fabrication d'une liaison de corps de matériau selon l'une des revendications 1 à 12, la plaque légère (7) présentant au moins une couche intermédiaire (7b) disposée entre deux couches de couverture (7a), comprenant les étapes suivantes :
- la création d'un premier évidement (11) en forme de demi-amande, adapté à la forme d'une première section d'encollage (2) d'un corps d'encollage (1) en forme d'amande, dans la couche intermédiaire (7b) de la plaque légère (7), étant entendu par forme de demi-amande une forme d'amande divisée le long d'un axe longitudinal, la forme d'amande étant une forme ovale formée par deux arcs de cercle identiques se croisant, les points d'intersection des arcs de cercle étant arrondis,
et l'évidement (11) étant directement adjacent aux deux couches de couverture (7a) ou empiétant partiellement dans au moins l'une des couches de couverture (7a),
- la création d'un évidement (13) en forme de demi-amande, adapté à la forme d'une deuxième section d'encollage (3) du corps d'encollage (1), dans le corps de matériau (6),
- l'introduction d'une première section d'encollage (2) du corps d'encollage (1) dans le premier évidement (11) et l'encollage du corps d'encollage avec les deux couches de couverture,
- l'introduction d'une deuxième section d'encollage (3) du corps d'encollage (1) dans le deuxième évidement (13) et l'encollage de la deuxième section d'encollage (3) avec le corps de matériau (6).

14. Procédé selon la revendication 13, **caractérisé en ce qu'**une surface de marche (10) du corps d'encollage (1) est disposée affleurante avec un bord latéral (7d) ou une surface du matériau léger (7).
